**Europäisches Patentamt**

(19) **European Patent Office**

**Office européen des brevets**

(11) Publication number: **0 114 944**

**B1**

(12) # EUROPEAN PATENT SPECIFICATION

(45) Date of publication of patent specification: **27.09.89**　　(51) Int. Cl.⁴: **G 06 F 12/08**

(21) Application number: **83110681.0**

(22) Date of filing: **26.10.83**

(54) **Method and apparatus for controlling a single physical cache memory to provide multiple virtual caches.**

(30) Priority: **28.12.82 US 453862**

(43) Date of publication of application:
**08.08.84 Bulletin 84/32**

(45) Publication of the grant of the patent:
**27.09.89 Bulletin 89/39**

(84) Designated Contracting States:
**DE FR GB**

(56) References cited:
**EP-A-0 039 412**
**EP-A-0 066 766**
**US-A-4 035 778**
**US-A-4 264 953**

**IBM TECHNICAL DISCLOSURE BULLETIN, vol.
25, no. 3B, August 1982, pages 1583-1585, New
York, US; L.S. DeORSEY et al.: "Page pinning
by software for I/O requests"**

(73) Proprietor: **International Business Machines
Corporation
Old Orchard Road
Armonk, N.Y. 10504 (US)**

(72) Inventor: **Dixon, Jerry Duane
801 Enfield St.
Boca Raton Florida 33431 (US)**
Inventor: **Marazas, Gerald Allan
22145 Serenata Circle West
Boca Raton Florida 33433 (US)**
Inventor: **Merckel, Gerald Ulrich
928 Gardenia Drive
Delray Beach Florida 33444 (US)**
Inventor: **McNeill, Andrew Boyce
181 NW 41 Way
Deerfield Beach Florida 33441 (US)**

(74) Representative: **Bonneau, Gérard
Compagnie IBM France Département de
Propriété Intellectuelle
F-06610 La Gaude (FR)**

EP 0 114 944 B1

# EP 0 114 944 B1

## Description

The present invention pertains to data processing systems, and more particularly, to a method of and an apparatus for controlling a single physical cache memory to provide multiple virtual caches in a data processing system.

In data processing systems, it is common to have one or more attachment devices, e.g., storage disks, for storage and retrieval of information. For example, in U.S. Patent 4,038,642 a plurality of I/O devices and associated I/O controllers are commonly connected to a host processor via an I/O interface bus. Each of the I/O attachment devices includes a microprocessor which cooperates with the host processor to implement data transfer between the main storage and the I/O device. An improvement on the Bouknecht et al. system is described in U.S. Patent 4,246,637 where a single I/O controller including a microprocessor is coupled to the host processor, and the plurality of data storage attachment devices are coupled to the output of the I/O controller so that a single microprocessor can coordinate data transfers to and from a plurality of attachment devices.

A problem in each of these systems is that each time the host processor requires data from one of the attachment devices, it must access the appropriate attachment device, and this can be a time consuming procedure. For example, in US patent 4,246,637 when data is to be transferred to the host processor from an appropriate attachment disk under Direct Program Control (DPC), command and data words are transferred from the main storage of the host processor to the microprocessor, and thence to a device data register. The appropriate coordination and control logic is exercised to retrieve the requested data from the appropriate attachment disk and to provide them to the host processor. For the reverse operation, i.e., writing into a disk from the main storage, the data to be written into the attachment storage device is loaded into the device data register and then the appropriate handshaking routines must be carried out to transfer this data into the desired attachment disk. In a cycle steal mode of operation, commands are provided to the microprocessor which enable it to "steal" data from the host processor main storage and load this data into the device data register, and the data is then transferred to the appropriate attachment disk in substantially the same manner as in the DPC mode.

Even though the speed of the system is improved, it is still necessary that one of the desired attachment disks be accessed in order to obtain the necessary information for the host processor. While signal processing speeds are quite fast, the time required to access an attachment storage device is limited by the necessity of physically moving the read/write heads or the storage medium, e.g. processing speeds are limited in disk subsystems by the time required for the disk to be rotated and for the head to seek the proper position.

Thus, it has been desirable to provide a data processing system in which it is not necessary to access an attachment data storage device such as a disk unit each time the host processor requires new data. The European patent publication EP—A—66 766 describes a data processing system comprising a host processor, peripheral storage units and an I/O Controller including a single physical cache memory, wherein multiple caches are provided by dividing the single cache memory into partitions, each being associated to a different peripheral storage unit, and the sizes of the partitions being adjusted proportional to their relative access frequency by the associated peripheral storage unit.

The cache memory is utilized for storing data which is most likely to be needed by the host processor in the immediate future. Thus, when the host processor subsequently requests additional data from the disk memory units through the I/O controller device, there is a substantial likelihood that the requested data be found in the cache memory. Because the data which is stored in the cache memory can be quickly transferred to the host processor main storage memory without the necessity of accessing the disk memory unit, the data retrieval time for the system is remarkably reduced.

In the arrangement of the above-mentioned patent publication each time that data is transferred from a disk memory unit to the host processor, the same data is also stored in the cache memory since there is a statistical probability that the same data will be used again in the near future. If the cache memory is full, the least recently used block of data in the cache memory is deleted and replaced by the newly requested data.

More specifically, when a particular record of data is requested by the host processor, which data is not presently in the cache memory, the controller will transfer to the cache memory a block of data containing the requested record. There is a statistical likelihood that records immediately subsequent to the requested record may also be needed in the near future and, if the requested record is located near the beginning of the transferred block, the new data later requested should also be in this block. If, however, the requested data record occurs during a later portion of the transferred data block, one or two additional blocks of data may be transferred on the premise that some data from these additional blocks will soon be needed. Further, a threshold may be set for transferring the one or two additional data blocks in order to maximize the efficiency of the system.

The controller maintains a directory table having a number of entries for listing the contents of the cache memory. Each requested data block has a single corresponding hash entry number which may, for example be the remainder of the disk system address divided by a prime hashing number such as 311. Each entry in the directory table is identified by a unique hash entry number. When a particular block of data is stored in the cache memory it is listed at its "home" position in the directory table, i.e., the position

2

in the directory table identified by the hash entry number of that data block. If more than one data block in the cache memory has the same hash entry number, one will be stored at its home position and the others will be stored at positions which are not the home position of any data block currently stored in the cache memory. These data blocks having the same hash entry number will then be connected in a conflict chain beginning with the home position and linked together via forward and backward pointers at each of the various directory table entry positions. Thus, in most cases it is only necessary to examine the home position of the requested data block to determine if it is currently stored in the cache memory, and at worst it is still only necessary to examine the home position and a few conflict positions.

An important requirement for effective usage of disk cache directory space is that fixed block operation be implemented. In such a design concept, all disk addresses are considered to fall within the fixed boundaries of a starting disk address and an ending disk address. Each record stored on a disk has a unique Relative Block Address (RBA) determined by its disk drive number, head number, cylinder number and record/section position, and the RBA's are further placed within a higher level blocking organization.

Each record has a uniquely associated RBA given by:

$$RBA = k_1 \text{ (cylinder nummber)} + k_2 \text{ (head number)} + \text{record number} + k_3 \text{ (drive number)},$$

where

$k_1$, $k_2$ and $k_3$ are constants determined from the design of the disk drive unit. For cache memory management purposes to be described in more detail below, blocking organization is achieved by dividing the RBA by the fixed block length in records. Thus,

$$\text{BLOCK NUMBER} = \text{RBA/(BLOCK LENGTH)}$$

where the block length is a system design parameter. In the following description, it is assumed that one "record" of data includes 256 bytes, one block includes 8 records, one page includes one block (2,048 bytes). Other memory configurations, however, are equally possible.

The address of each record of information may be identified by a block number and a record address relative to the identified block. Since there are eight records per block, the block number of a record can be determined by dividing the RBA by eight. Hashing is accomplished by dividing the block number by a hashing factor which is a prime number, and using the remainder thereof as the entry point (hash entry number) to a directory table. The hashing factor can be 311, although other hashing factors can be used is desired. The file subsystem block address is defined as the whole quotient of the block number and the hashing factor, without regard to the remainder thereof.

Minicomputer systems have recently evolved so as to acquire many of the properties found in larger data processing systems. Specifically, minicomputer systems are evolving from earlier structures in which only a single processing task with a data base orientation can be performed at one time into virtual storage systems capable of performing simultaneously (i.e., on a time-sharing basis) a plurality of different data processing tasks.

Although the data processing system of the European patent publication EP—A—66 766 was in fact capable of producing a marked increase in the average processing speed for many applications, nevertheless, there are many data processing applications, particularly those involving virtual storage systems, in which the cache memory system of the above patent publication was not suitable. For instance, in a paging data set application, the data which is to be communicated between the disk memory unit and the host processor actually consists of programming instructions assembled into various routines, only some of which are used at any given time. The routines are "paged" into and out of the main storage of the host processor as needed. In this type of application, the cache management algorithm of the above-discussed patent publication which is designed specifically for data base search applications, would not produce a significant increase in average processing speed because it does not take into account the nature of the data being transferred between the disk memory unit and the main storage of the host processor. Particularly, in a data processing application of the paging data set type, it is desirable to maintain in the cache memory the complete routines currently in use. An algorithm designed for data base types of processing tasks is not capable of accomplishing this.

Another type of data processing task for which the cache management algorithm of the European patent publication EP—A—66 766 applications does not produce the desired results is a so-called critical response time application, for instance, a process control application, in which the movement of data into and out of the cache is not related to the frequency of use of the data. For instance, for a data processing task of controlling the operation of a chemical plant, it may be necessary to shut down critical operations of the plant in response to sensed alarm conditions. Unless the instructions or data necessary to perform such a shut-down operation are very quickly available, a disastrous failure may occur. If the algorithm of the above-discussed patent publication were employed in such a situation, the necessary data would almost certainly not be present in the cache memory because it is very infrequently used.

Overcoming the disadvantages of the prior art, the present invention provides a method for controlling the operation of a single physical cache memory, such as the single physical cache memory described in the European patent application EP—A—66 766 so as to provide a plurality of "virtual" caches. The concept

3

of "virtual" cache, i.e., the application of virtual — instead of physical — addresses to the cache, is evoked in US Patent 4,264,953 which describes a system including a main memory and several CPUs each one being associated with a cache. Each cache responds to the virtual address signals issued by the associated CPU in parallel with a mapper unit which, in turn, converts the virtual address signals to physical address signals for addressing the main memory. Contrary to the invention, there is not a single physical cache divided into virtual caches, but several physical caches associated to the different CPUs for accessing to a single main memory by means of a virtual address.

More specifically, the invention provides such a method for managing a single physical cache memory in which plural virtual caches are created, one for each of a plurality of different data processing tasks being performed by the host data processor.

The data processing system with which the invention is intended for use includes a host processor, a data file in which are stored a plurality of pages of data each of which is composed of a plurality of data records, and an I/O controller which controls the transfer of data records between the host processor and the file. The host processor is capable of simultaneously, that is, on a time-sharing basis, performing a plurality of different types of data processing tasks. The I/O controller includes a single physical cache memory. In accordance with the invention, the I/O controller comprises Control means for operating the physical cache memory as a plurality of different virtual caches assigned to different functional types of data processing tasks, and for adjusting the number of cache memory locations assigned to the different virtual caches in accordance with at least two different sets of cache management algorithms for obtaining optimum performance in the difference functional processing tasks.

Data is transferred from the file into the various virtual caches as it is requested by the host processor for example, data base, paging data set and critical response time tasks. When the host processor again requests data from the file, there is a very high probability that the data will be found in the virtual cache associated with the data processing task then being performed, thereby greatly improving the overall processing speed.

Different algorithms may be used for managing the various virtual caches, specifically, for controlling the relative sizes of the various virtual caches. For similar data processing tasks, similar algorithms may be used, although different values for the same operating parameters or different types of operating parameters may be used for different classes of processing tasks. For instance, for the class of paging data set data processing tasks, the relative cache size may be set to be a larger proportion of the overall data set associative with the task than for an ordinary data base processing task. For the class of sequential data base, either a sequential re-use algorithm or a least-recently-used algorithm may be employed. For the class of data processing tasks for which pinned data is required, the data which is pinned in the cache must remain there, independently of its frequency of use or of what is occurring in other virtual caches within the cache memory, thus requiring a different type of algorithm altogether.

For a better understanding of the present invention, reference is made to the following description taken in connection with the accompanying drawings, wherein:

Figure 1 is a block diagram of a data processing system in which the present invention can be used to advantage;

Figures 2A—2D show formats of data control blocks communicated to the I/O controller of the data processing system of figure 1;

Figure 3A is a directory table, figure 3B is a least recently used table, and 3C is a virtual cache control table, all of which are stored in the RAM of the data processing system of figure 1;

Figure 4 is a flow chart illustrating a search through the directory table for a requested data block;

Figures 5A and 5B are explanatory diagrams of a directory table search in cases in which the requested data block is not and is in the cache memory, respectively;

Figure 6 is a flow chart illustrating the overall operational sequence followed by the microprocessor in the I/O controller of the data processing system of figure 1;

Figures 7A—7D, taken together, are a flow chart illustrating in detail the cache management algorithm illustrated broadly in figure 6;

Figure 8 is a flow chart illustrating in more detail a step in the algorithm of figures 7A—7D of adding a block to the cache memory;

Figure 9 is a flow chart illustrating in more detail a step in figure 8 of adding a block to the cache using a current hash number;

Figures 10A and 10B are explanatory diagrams of the management of the "free chain" maintained in the directory table of figure 3A;

Figures 11A—11D illustrate various cache memory operations performed in the flow chart of figure 8;

Figure 12 is a flow chart illustrating in more detail a step in figure 8 of exchanging conflicting and free entries of the directory table;

Figures 13A—13C are explanatory diagrams of a prestaging, or prefetch, operation;

Figures 14A and 14B, taken together, are a flow chart illustrating in detail the step in the algorithm of figures 7A—7D of performing a prefetch calculation; and

Figure 15 is a flow chart illustrating in detail the step in the algorithm of figures 7A—7D of unpinning a page from cache.

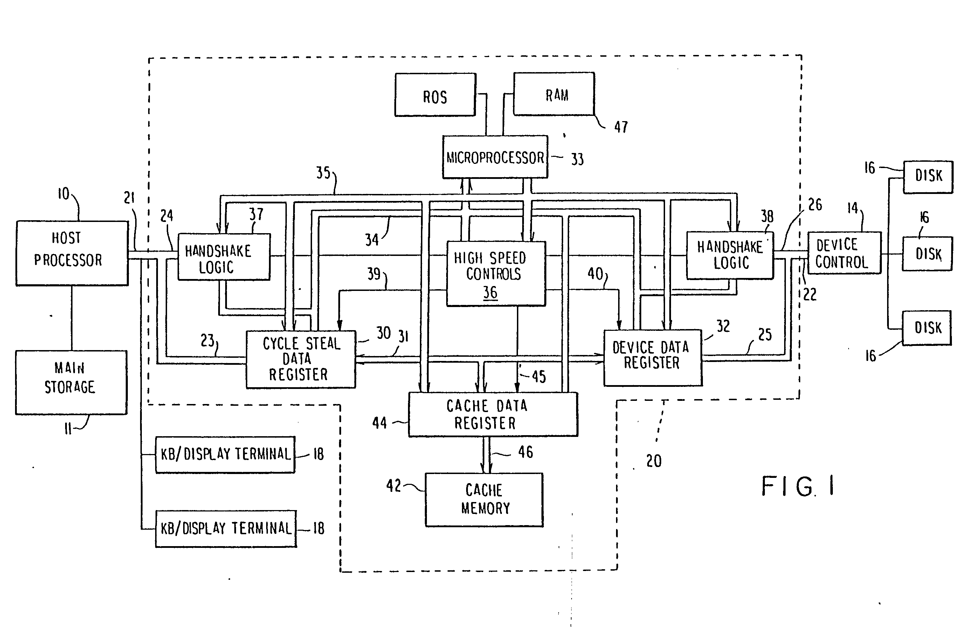

Figure 1 illustrates a data processing system in which the invention can be used to advantage. This system includes a host processor 10 and associated main storage memory 11, a device control unit 14 which is coupled to at least one attachment device (e.g., a disk unit) 16, display terminals 18 and an I/O controller 20. The controller 20 controls the transfer of data and other information between the host processor 10 and the devices 16 via the appropriate control units 14.

The host processor communicates with the controller 20 via a channel interface bus 21 which, in turn, communicates with the device control units via a device interface bus 22.

For the sake of example, it will be assumed herein that the host processor 10 is a Series/1, Model 5 minicomputer manufactured and marketed by International Business Machines Corporation of Armonk, New York, and described in the IBM Manual entitled "Series/1, Model 5, 4955 Processor and Processor Features Description", IBM Order No. GA34—0021—3 (4th Ed., dated September 1976), and U.S. Patent 4,038,642 mentioned above. Further, the controller 20 according to the present invention is an improvement over the controller disclosed in U.S. Patent 4,246,637 and the microprocessor may be of the type described in U.S. Patent 4,173,782.

As shown in figure 1, the channel interface bus 21 within the controller 20 includes a channel data bus 23 and a channel control bus 24. Similarly, the device interface bus 22 includes a device data bus 25 and a device control bus 26. For automatic high-speed cycle steal operations, data buses 23 and 25 are interconnected by a cycle steal data register 30, a bypass data bus 31 and an attachment device register 32. Each of the buses 23, 25 and 31 is either a bi-directional bus or a pair of unidirectional buses for data transfer in either direction.

For non-automatic cycle steal operations, data and other information can be transferred between the host processor and a microprocessor 33 via channel data bus 23, CSDR (Cycle Steal Data Register) 30 and a microprocessor data bus composed of a DBI (Data Bus In) bus 34 and a DBO (Data Bus Out) bus 35. Data and other information can be transferred in either direction, between the microprocessor 33 and a device control unit 14 via the device data bus 25, the attachment device data register 32 and the microprocessor data buses 34 and 35.

The channel control bus 24 and device control bus 26 each communicate with the microprocessor 33 via coordination and control (handshake) logic 37 and 38 under the control of high-speed control hardware 36. The microprocessor 33 is also in communication with the control hardware 36 via microprocessor buses 34 and 35. In response to a start cycle steal command from the host processor 10, the microprocessor 33 provides various initial parameters and values to the control hardware 36. Thereafter, the control hardware 36 is capable of automatically controlling the data transfer operations without further intervention from the microprocessor 33. In other words, for the case of an automatic cycle steal operation, the microprocessor 33 provides the initial set-up of the control hardware 36, whereafter the control hardware 36 takes over and runs the actual data transfer operations. This includes the supply of register load pulses via lines 39 and 40 to the CSDR 30 and attachment DDR (Device Data Register) 32. A load pulse on line 39 transfers data from the DDR 32 to the CSDR 30 via the bypass data bus 31, and a load pulse on line 40 transfers data in the opposite direction. The automatic control provided by the control hardware 36 further includes performance of the appropriate handshaking sequences on the channel control bus 24 via the handshake logic 37 for transferring data between the host processor and the CSDR 30, and the performance of appropriate handshaking sequences on the device control bus 26 via handshake logic 38 for transferring data between the DDR 32 and the device control unit.

The controller 20 according to the present invention further includes a cache memory 42 and associated CDR (Cache Data Register) 44. As with the other data registers, CDR 44 is coupled to microprocessor via microprocessor data busses 34 and 35 and receives a load pulse on line 45 from the control hardware 36. The CDR 44 is also connected with the CSDR 30 and DDR 32 via bypass bus 31. When data is requested by the host processor, the microprocessor first determines if the requested data is presently stored in the cache memory 42. If so, this is referred to as a "read hit", and the requested data is transferred to the host processor via cache data bus 46, CDR 44, bypass data bus 31, CSDR 30 and channel data bus 23. If some or all of the requested data is not contained in the cache memory 42, a situation referred to as a "read miss", the data is then obtained from the attachment devices (disk files) in a conventional manner and then transferred to the cache memory 42 via bypass bus 31, CDR 44 and cache data bus 46. As will be described in more detail below, it may also be desirable to "prefetch" additional data other than that requested by the host processor and to store this additional data in the cache memory on the assumption that it will soon be requested by the host processor.

The requested data is then transferred to the host processor from the cache via bus 46, CDR 44, bypass data bus 31, CSDR 30 and channel data bus 23.

After the host processor finishes an operation on a particular block of data, it may wish to rewrite the new data back into the original disk file storage location. In this instance, the microprocessor determines if the contents of this location of the disk file are presently stored in the cache memory. If so, a "write hit" condition occurs, and this data is updated in the cache memory since it has now been changed. If the contents of the addressed device are not presently within the cache memory, the new data will be written into cache and from there to the disk if an entire block of data is being rewritten, otherwise, it will be written directly to the disk.

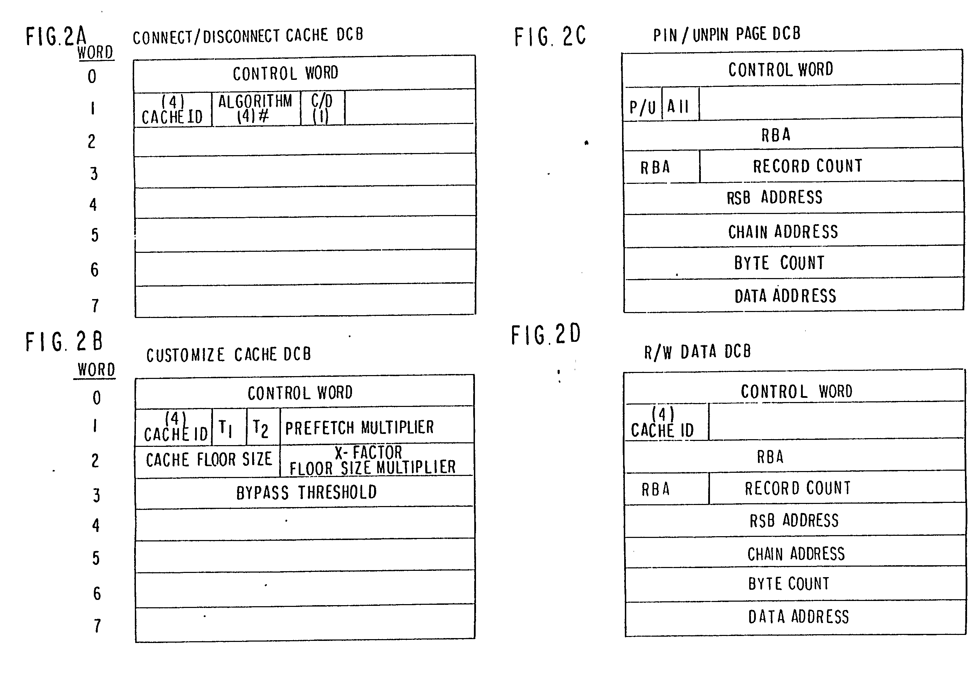

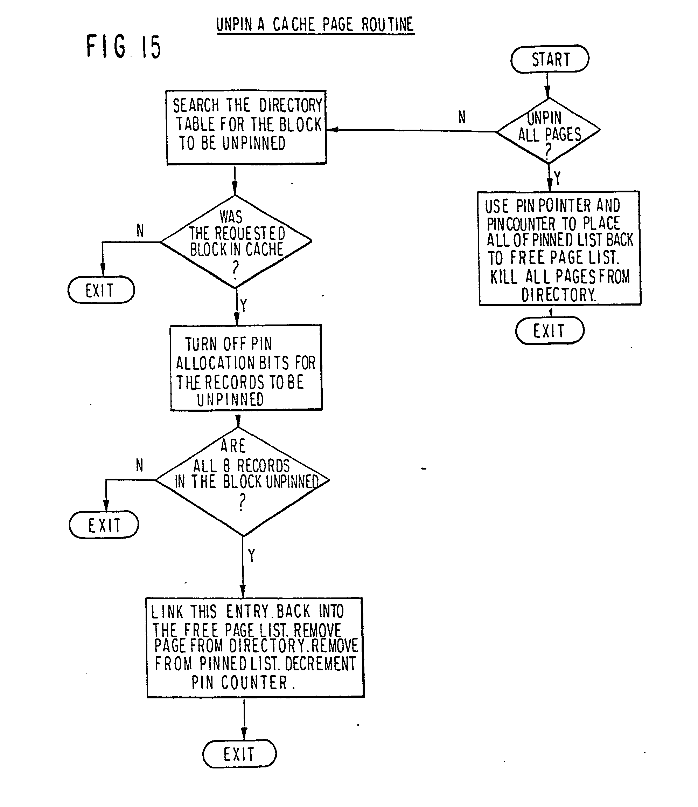

Preferred embodiments of a method for operating a single cache memory so as to provide a plurality of virtual caches which are capable of providing an optimum caching function for each of a plurality of respective types of data processing tasks will now be described in reference to figures 2 to 15.

The specific types of data processing tasks accommodated by the preferred embodiments of the method of the invention are:

(1) Data Base. An example of this type of data task is a payroll file application in which data records needed for assembling and computing particular payroll information are extracted from the disk file and transferred into the main storage of the host processor. In this type of data processing task, a relatively small amount of cache memory relative to the total data base is sufficient, for instance, 0.1 % of the total data base. This relatively small proportion of cache memory size relative to the total data base has been found empirically to provide a relatively high read hit ratio.

(2) Paging Data Sets. In this type of data processing task, data representing instructions of a number of different processing routines is periodically transferred from the disk file to the main storage of the host processor. For instance, if there are five routines A through E associated with a particular processing task, routines A, B and C may be initially needed for program execution. After some time, routine A is not needed, but routines B and C are still required, along with routine D. At that time, the working set then consists of routines B, C and D. Sometime later, routine B is not needed, but routine E becomes part of the working set. For this type of data processing task, it is desirable to hold in the associated cache all the routines which are being used at any one time. It has been found that a cache memory allocation corresponding in size to about 20 % of the overall instruction set size is needed to achieve a significant reduction in overall processing time.

(3) Guaranteed Response Time. In this data processing mode, a guaranteed minimum response time for particular identified data records is required. That is, identified data must be stored in and retained in the associated cache at all times, regardless of the frequency of use of the data. The type of cache memory management needed for this type of data processing task is very much different from that for the types of tasks (1) and (2) above. In this type of task, the allocation of the necessary portion of cache memory needed to provide the specified guaranteed minimum response time must be set by the user.

The method for controlling a single physical cache memory of the invention can accommodate each of these three different types of processing tasks. Task types (1) and (2) above can be carried out using the same algorithm; it is only necessary to change specific values of certain parameters of the algorithm in accordance with the particular task to be performed. On the other hand, data processing task type (3) requires an entirely different type of algorithm.

In accordance with the invention, the single physical cache memory is divided, on a dynamic basis, into a plurality of virtual caches, one cache being assigned to each data processing task being performed by the host processor, or at least to each of the data processing tasks being performed by the host processor for which a cache allocation has been requested by the host processor. The way in which this is accomplished will now be described.

Referring now to figures 2A—2D, there is shown therein the format of various DCBs (Data Control Blocks) utilized to effect the transfer of identified data records between the disk file and the main storage of the host processor and also to create and set operating parameters of the various virtual caches.

Figure 2A shows the format of a connect/disconnect cache DCB which is used to create a virtual cache and to associate with that cache a particular algorithm type (algorithm number). Word 0 of this DCB, as in the case of all of the other DCBs, is a control word, or identification code, simply indicating the type of the DCB. Word 1 contains an identifying number for the cache, an algorithm type number, and a C/D (control/Data) bit. The cache identification number in the preferred embodiment herein described may range from 0 to 7. That is, in this example, eight possible virtual caches having identifying number 0 to 7 are possible. The algorithm type number selects the particular algorithm with which the cache indicated by this DCB is to be managed. In the present example, two different types of algorithms are utilized, one for data base and paging data set tasks (task types (1) and (2)), and another for pinning data sets (task type (3)). Of course, other types of algorithms may be used as desired depending upon the particular data processing tasks which the host processor is called upon to perform.

The DCB of figure 2B is termed a customize cache DCB. The purpose of this DCB is to permit the user, through the host processor, to specify the various parameters needed by the algorithm selected for managing the associated cache. The cache ID number is the same as in the case of the connect/disconnect cache DCB of figure 2A. Parameters $T_1$ and $T_2$ as will be explained in more detail below, are threshold values used to determine the number of data records transferred at one time into the cache memory from the disk file. Briefly, $T_1$ and $T_2$ are threshold values related to where within a block of data a target record falls which are used to specify how many data blocks in addition to the block in which the particular target record is contained are to be read from the disk file and stored in the cache. $T_2$ must always be greater than or equal to $T_1$. If $T_1$ is exceeded by a value R representing the position of a target record within a block, for example, two additional data blocks are transferred from the disk memory to the cache, while if R exceeds $T_2$, three additional blocks are transferred.

The prefetch multiplier of the customize cache DCB of figure 2B allows the user to require that multiples of the number of additional data blocks otherwise specified by R, $T_1$ and $T_2$ be transferred into the cache memory. For instance, if the prefetch multiplier has a value of 1, then, exactly as in the case described above, if R exceeds $T_1$ but not $T_2$, two additional blocks are transferred, and if R exceeds both $T_2$ and $T_1$, three additional blocks are transferred. If, however, the Prefetch Multiplier has a value of 2, four and six additional blocks of data are transferred in the cases that R exceeds $T_1$ and $T_2$, respectively.

Word 2 of the DCB of figure 2B contains values of a cache floor size and an X-factor floor size multiplier. The cache floor size permits the user to designate the size of the cache to be associated with the particular task. The X-factor floor size multiplier is used in conjunction with the cache floor size to specify an absolute minimum to which the size of the virtual cache may shrink if it is not actively being used. Specifically, if after N accesses to the disk memory the associated virtual cache is lowered to a number of blocks equal to the X-factor floor size multiplier times the cache floor size.

The bypass threshold of Word 3 of the customize cache DCB of figure 2B is used to permit the virtual cache to be bypassed if the amount of data being read from the disk file in one access is too large for the cache memory to accommodate. The bypass threshold is thus a value representing a number of records of data transferred from the disk file above which the data must be transferred directly from the disk file to the main storage of the host processor without storage in the cache memory.

The pin/unpin page DCB of figure 2C is used to pin and unpin pages in the cache memory in the case of data processing task type (3) described above. The first bit in the Word 1 of the pin/unpin page DCB is set to 1 when the page or pages specified by the DCB are to be pinned and to 0 when the page or pages are to be unpinned. The other parameters in this DCB, namely, the RBA, the record count, the RSB address, the chain address, the byte count and data address are all standard parameters for DCBs of the Series/1 host processor used to instruct the transfer of data between the disk file and host processor.

The read/write data DCB shown in figure 2D is the standard data retrieval DCB for the Series/1 processor to which a cache ID parameter has been added. For each data reading or writing operation between the host processor and the disk memory, the host processor with this DCB must specify, if a virtual cache is being maintained for the associated processing task, the cache ID for that task.

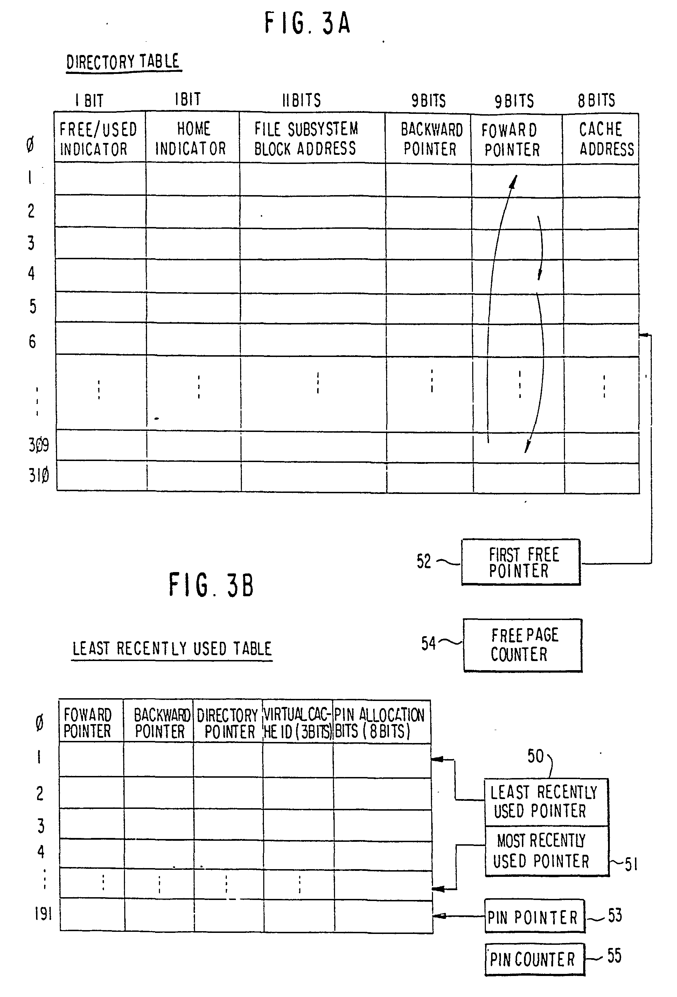

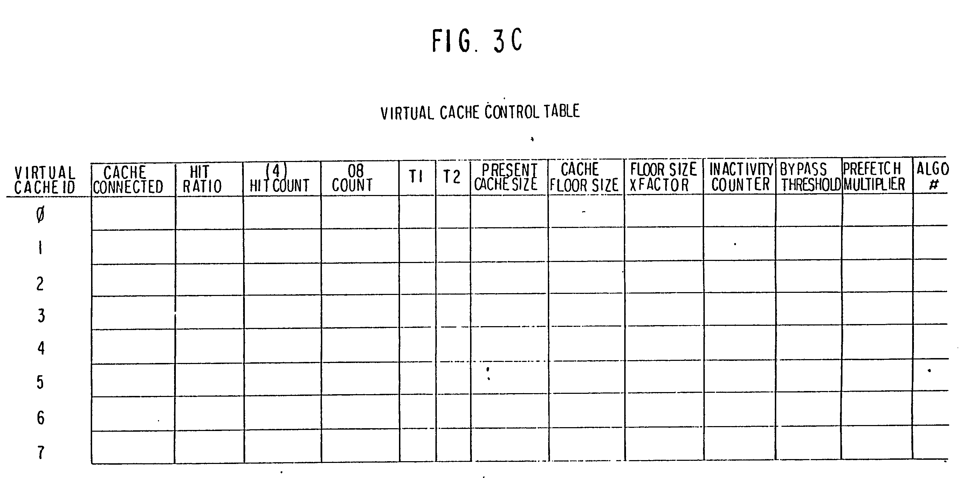

A directory table of the cache memory contents is maintained in a random access memory (RAM) 47 in figure 1. The format of the directory table is as shown in figure 3A.

The directory table represents a high level index to the cache, wherein a list is maintained of what is presently in cache, and where it may be found. The directory table keeps track of the contents of cache at all times, correlating cache contents with blocks of data on disk, and comprises a free/used indicator (1 bit) a home indicator (1 bit), the file subsystem block address (11 bits), a backward pointer (9 bits), a forward pointer (9 bits), and the cache address (8 bits). The number of bits can obviously be varied according to particular system requirements.

The free/used indicator indicates whether the entry is currently used to identify a particular block of data in cache. The home indicator, as the name suggests, indicates whether the entry is a "home" entry, as will be discussed in more detail below. The file subsystem block address together with the hash entry number uniquely address a block of data on a disk. The cache address indicates where in the cache memory the data block identified by the file system block address and hash entry number resides. Finally, the forward and backward pointers are used to link the entries in a chain.

Any data block which may be addressed produces a single hash entry number. In general, however, a multiplicity of data blocks will produce the same hash entry number. These multiple data blocks produce what are termed "conflict entries", as opposed to a "home entry" for the original data block for a given hash entry number. A search for a particular data block must be conducted among the multiple conflict items to determine whether the item is in cache. Thus, the hashing factor should be selected to keep the average length of the conflict list within acceptable bounds.

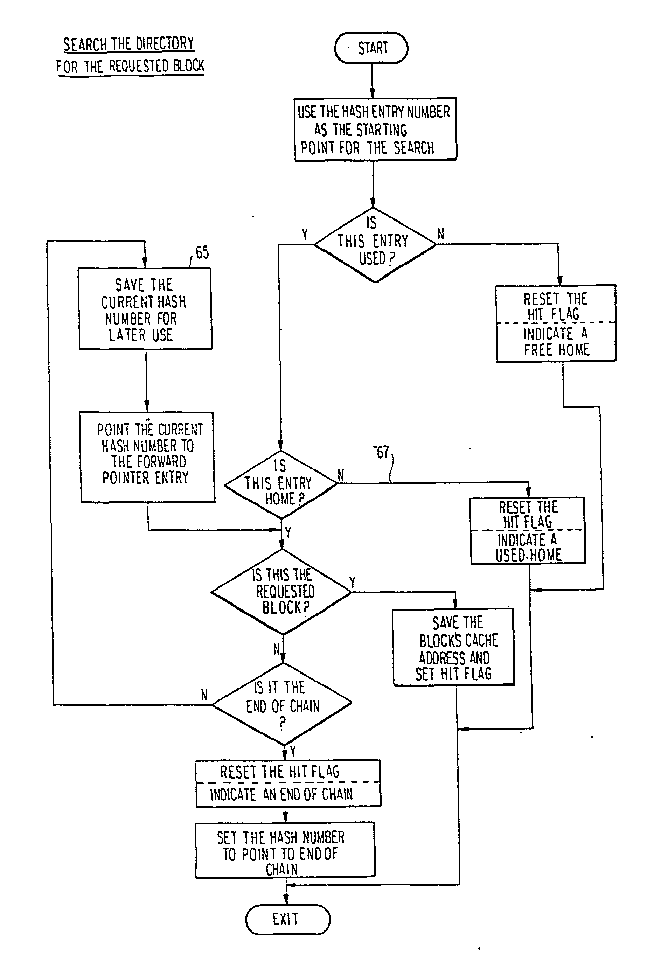

Assuming that a user requests data to be read from or written into a disk or other storage unit, the microprocessor calculates the hash entry number and a check of the directory table is made to see if the requested data is in the cache memory. With reference to the flow chart of figure 4 the hash entry number is used as the starting point for the search. For a read operation, at the directory location identified by the hash entry number, the free/used indicator bit is checked to initially determine whether the entry has been used. If unused, the requested data is not resident in cache, a hit flag is reset to indicate a "read miss", and a "free home" is indicated. The requested data is then retrieved from the appropriate disk and stored in the cache memory and can be indexed at this location in the directory table.

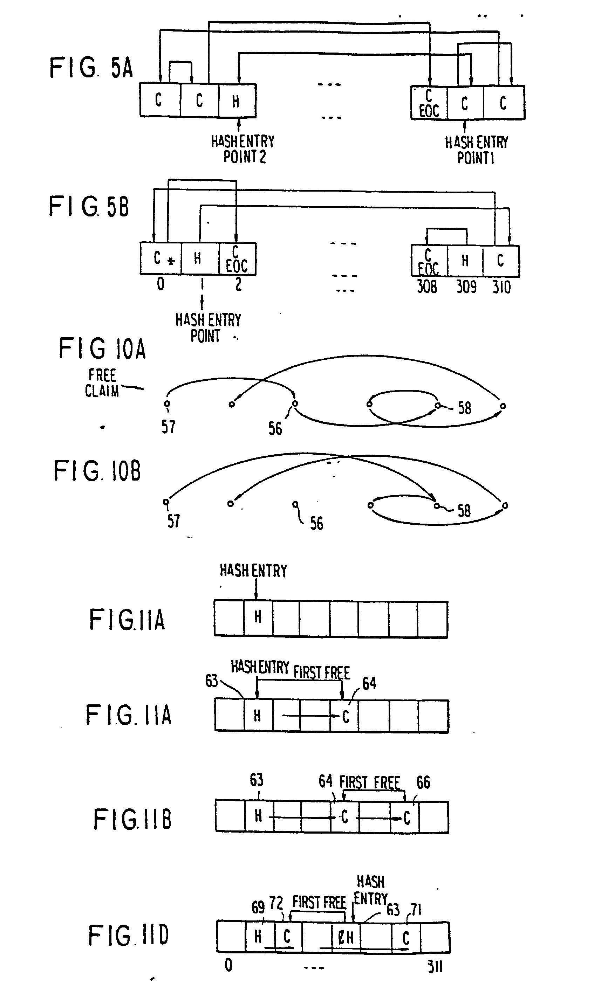

If the entry is used, a check of the home indicator is made to determine whether the entry point is a "home" entry or a "conflict" entry. By definition, all blocks in cache must produce an entry point at a home entry rather than a conflict entry. Thus, if the entry point is a conflict entry, it can be immediately determined that the requested block is not in cache. Figure 5A illustrates a situation where the requested data is not in cache. If the requested block produces hash entry point 1, which is a conflict entry, it can immediately be determined that the requested block does not exist in cache. Thus, for entry point 1 in figure 5A, the requested block is not in cache, the hit flag is reset to indicate a read miss, and a "used home" is indicated, as shown in figure 4.

The possibility exists, however, that a data block not in cache may produce an entry point at a home entry, such as hash entry point 2 in figure 5A. In this case, the search of the linked chain of entries must be made to determine whether the block is in cache.

First, as shown in figure 4, the file system block address (quotient) is compared with the relative address of the requested block to determine whether the directory table entry corresponds to the requested block. Since it is not the requested block a further check is made to determine whether the present entry is the end of chain (EOC). Since it is not, the forward pointer of the entry at point 2 is used as the next point of

7

entry, and the process iteratively continues until the end of chain is indicated by the last entry's forward pointer, at which point the hit flag is reset to indicate a read miss, end of chain is indicated, and the hash entry number is pointed to the end of the chain.

If at any time during this iterative search the requested data block is located, the block's cache address is saved and the hit flag is set to indicate a read hit. Figure 5B illustrates the situation where the requested block is in the cache at the corresponding directory table entry indicated by an asterisk in the figure. The original hash entry number will point to a home entry whenever the requested block is located in cache. The original hash entry need not directly point to the entry in the directory table corresponding to the requested block but, as shown in figure 5B, the requested block may be found at the second conflict entry by following the forward pointers.

Also maintained in the RAM 47 is a Least Recently Used (LRU) table having a format shown in figure 3B. The LRU table has one listing for each page in the cache memory, a maximum of 192 pages in this embodiment. The forward pointer in each listing of the LRU table points to the listing of a more recently used page, with the forward pointer of the most recently used listing pointing to the first free page. Similarly, the backward pointer of each LRU listing points to a lesser used page, with the last of that chain being the least recently used page. The directory pointer in each LRU listing points to a particular one of the 311 entries of the directory table. The virtual cache ID identifies the virtual cache with which the entry is associated. If the entry corresponds to a page which is pinned in cache, pin allocation bits will be set to the 1 state to indicate which records are actually required to be pinned. The pages which are pinned do not otherwise form a part of the linked LRU list. Pointers 50, 51 and 52 figures 3A, 3B are preferably provided to point to the least recently used and most recently used entries in the LRU table. A free page counter 54 may also be provided. A pin pointer 53 indicates which entries in the LRU list correspond to pinned pages. This is done to prevent those pages from being deleted from the cache memory, no matter how infrequently they may be used. A pin counter 55 specifies the total number of pinned pages.

When a new page is to be written into the cache memory and there are no free pages available, the least recently used (LRU) page, with the exception of pinned pages, is deleted from the cache memory. This newly written page then becomes the most recently used listing in the LRU table, and its backward pointer points to the previous most recently used listing with its directory pointer pointing to the corresponding hash entry number in the directory table.

For a write operation, a "write-through" technique is implemented whereby data is written into the cache memory and thence to a disk file, if it is a full data block, unless the data is already in cache in which case it is merely transferred from the cache memory to the disk while the appropriate disk page is updated to most recently used status. However, if the data to be written exceeds the bypass threshold discussed above, it is transferred directly from the system to the disk if it is not presently in cache and is less than a full data block.

Figure 3C shows the format of a virtual cache control table which is also maintained in the RAM 47. The virtual cache control table contains eight lines, one for each of the eight possible virtual caches. The first column of the virtual cache control table, labeled Cache Connected, is a single bit which specifies whether the corresponding virtual cache specified by the virtual cache ID is active or not. The hit ratio is a value which indicates the fraction or percentage of "hits" in the cache memory, that is, the fraction or percentage of the total number of data accesses by the host processor in which the requested information was found in the cache memory. The hit ratio is computed by dividing the OP Count (the total number of accesses) into the Hit Count value (the number of times that the requested information was found in the cache memory). The value stored under the heading Inactivity Counter is the number of times that the disk file was accessed without the requested information being found in the cache memory. The remainder of the parameters which make up the virtual cache control table is derived directly from the customized cache DCBs of figure 2B.

It should of course be clear that the virtual cache control table is used only in the cases of data processing task types (1) and (2) described above as it is not needed in the case of task type (3) where particular pages of data are fixed in cache and there is no dynamic variance of the cache size.

It should also be mentioned that it is preferable that the sum of all pinned pages and cache floor sizes be less than a fixed value, for example, 170. The reason for the limit is to allow, in the example given, 22 "floating" pages to prevent "fighting" among virtual caches for free page spaces. It is convenient that the comparison of the sum of the pin pages and cache floor sizes with the fixed value take place each time that a customized cache DCB (figure 2B) is received from the host processor.

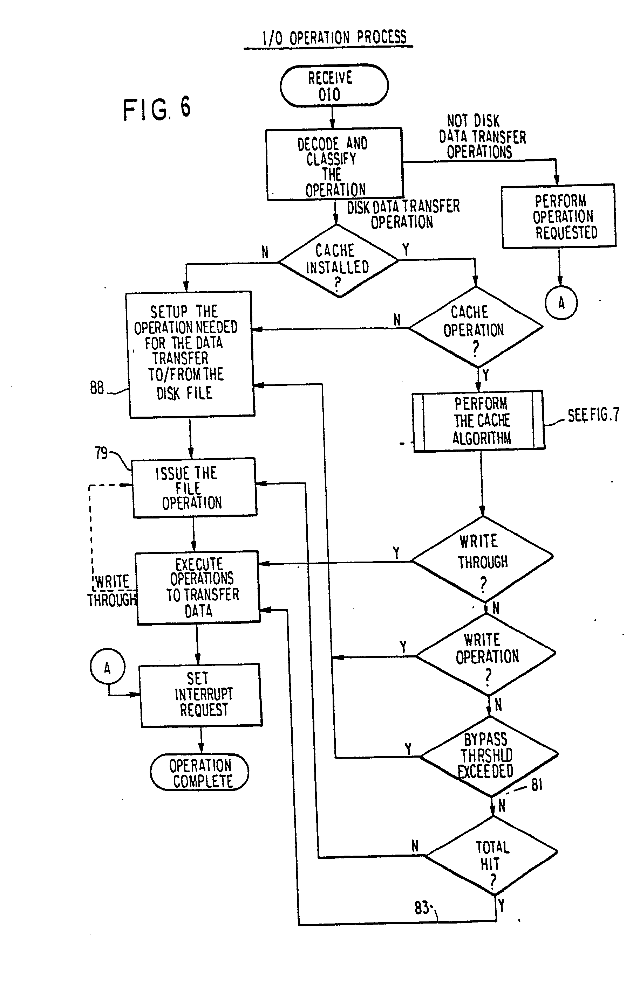

Figure 6 is a flow chart illustrating the overall operation of the I/O controller. As shown in figure 6, the microprocessor then examines the command and, if the command does not require data transfer to or from a disk, the requested operation is performed and the operation is completed by setting the interrupt request. Assuming that a disk data transfer operation is requested, the microprocessor then determines if a cache memory has been installed in the system. If not, the system operates in a manner substantially similar to that described in the above-referenced U.S. patents 4,256,637 and 4,038,642.

If a disk data transfer operation is requested, and a cache memory installed, the microprocessor then determines if a cache memory operation has been requested and, if so, the controller according to the present invention performs a cache algorithm to be described in more detail below which is essentially concerned with the management of data within the cache memory.

After performing the cache algorithm, if a write operation is requested if write through is to be implemented, the microprocessor implements all of the data transfer operations set up in the cache algorithm and must also issue the file operation to access the disk file for the cache-to-disk transfer. If write-through is not to be implemented but data is to be written directly to the disk file, the required data transfer operations will not have been set up in the cache algorithm, and the microprocessor sets up and implements the necessary operations to write the data from the host processor into the designated disk.

If a read operation rather than a write operation is requested, the microprocessor then determines if the bypass threshold has been exceeded. As explained above, the bypass threshold is used to prevent long sequential data runs from being placed in the cache memory. Because long sequential runs would require a large portion of available cache memory, and moreover tend to have less favorable reuse properties, it is undesirable to store this type of data in the cache memory since this would lower the hit ratio, i.e., the probability of finding the next requested data in cache. Accordingly, some predetermined number, for instance, 4352 bytes, is used as a maximum number of bytes of data which will be permitted into the cache memory on a single data transfer request. If larger amounts of data are requested on a single access, the decision is made that a sequential run is present and the data is not allowed into the cache on a miss.

If the bypass threshold has not been exceeded and, if a total hit has occurred, i.e., all of the requested data is presently in the cache memory, the controller then merely executes the necessary operations to transfer the requested data from the cache memory to the host processor. If a total hit has not occurred, the requested data is then transferred from the disk to the cache memory and the appropriate operations are implemented to transfer the data from the cache to the host processor.

For read operations that are a total hit, the requisite operations are set up in the cache algorithm itself as will be described in more detail below and, as shown in figure 6, the step of setting up these operations can therefore be bypassed. In contrast, a non-cache operation or, a non-write through write operation, or a read operation request where the bypass threshold is exceed each require that the microprocessor set up the required operations for the data transfer to or from the disk file.

After executing the data transfer operations, the interrupt request is set as described in more detail below and the operation is complete.

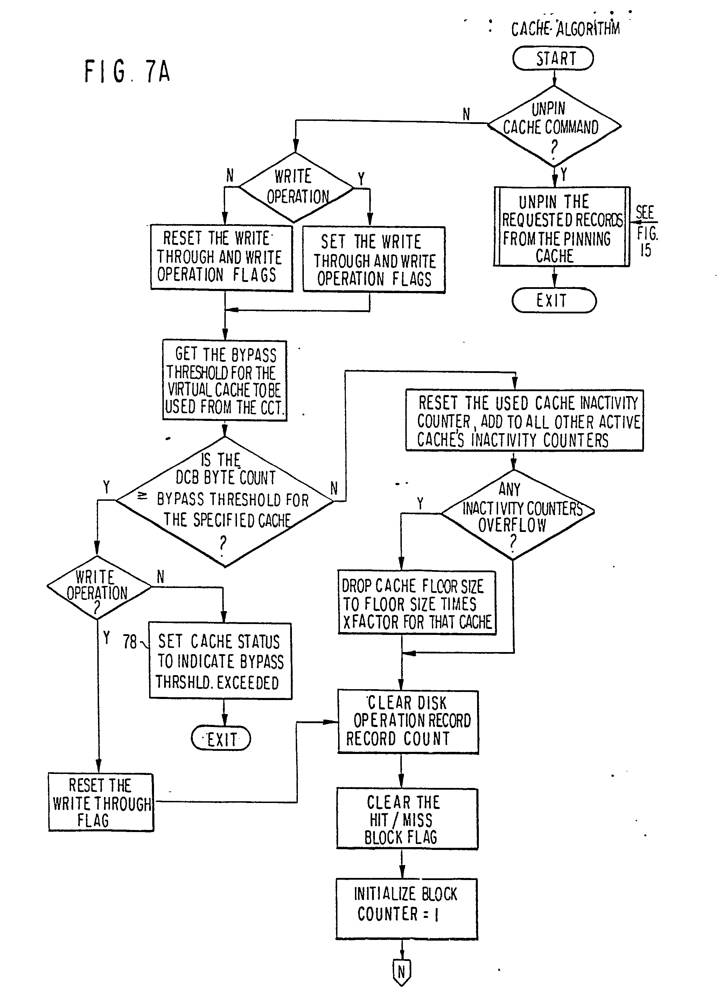

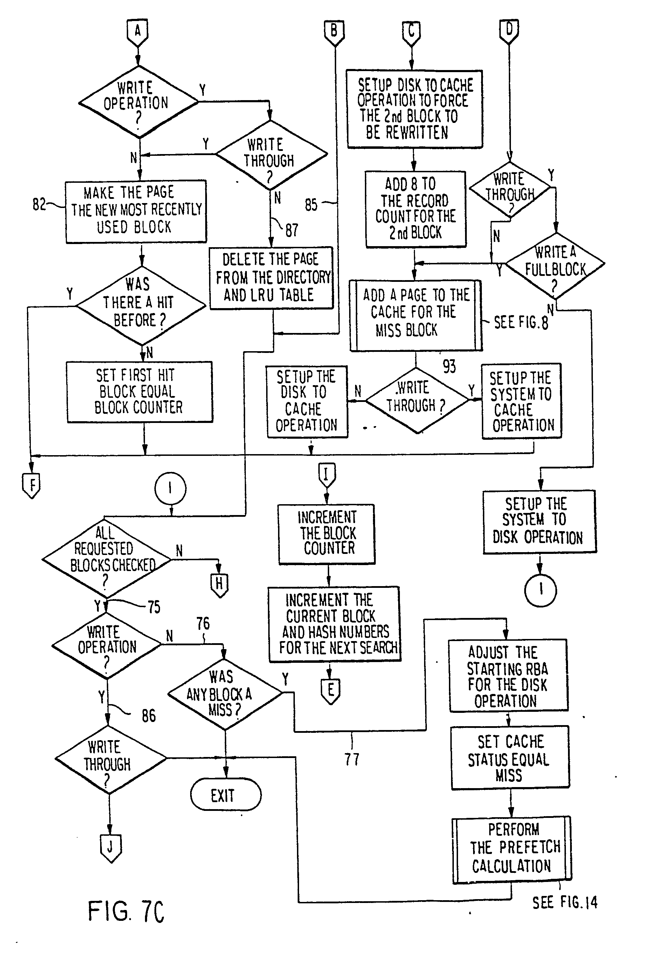

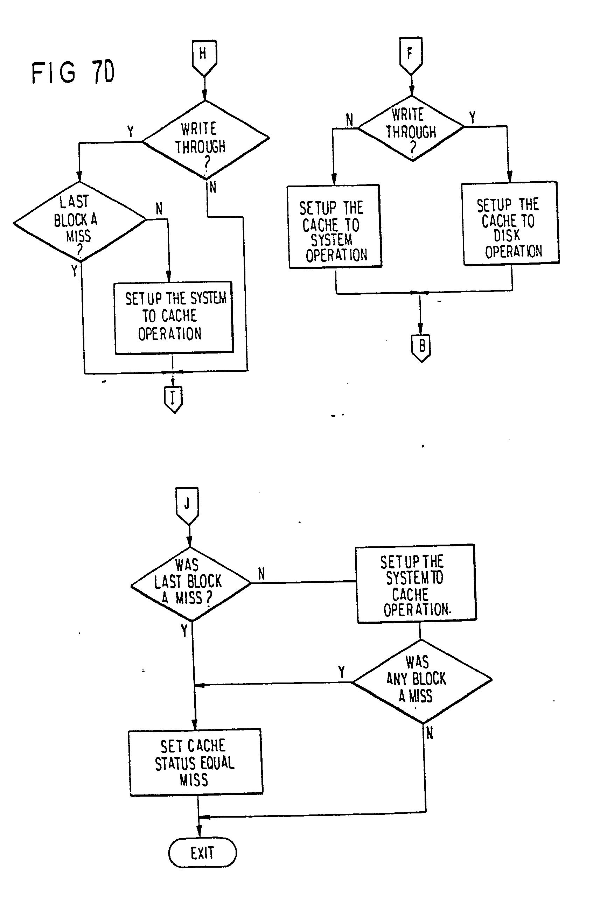

The operation of the controller will be described in more detail under the assumption that the command received from the host processor is a requested for data which is not presently stored in the cache memory, thus resulting in a "read miss" situation. As shown in the flow chart of figure 6, if a cache is installed and a cache operation is requested, the cache algorithm is performed. A flow chart of the cache algorithm is shown in figures 7A—7D.

First, in figure 7A, it is determined whether or not an unpinned cache command has been received. If an unpinned cache command has been received, the requested records are unpinned from the pinned locations in the cache memory in accordance with the procedure specified in the flow chart of figure 11. If no unpinned cache command has been received, the microprocessor determines if a write operation has been requested and, if not, the write through an write operation flags are reset to indicate a read operation. The microprocessor then examines the bypass threshold for the particular virtual cache. The bypass threshold value is, of course, taken from the cache control table (figure 3C). If the DCB byte count is greater than or equal to the bypass threshold value for the specified cache, it is then determined whether or not a write operation is to be performed. On the other hand, if the DCB by count is less than the bypass threshold for the particular virtual cache, the corresponding cache inactivity counter in the virtual cache control table is reset to 0, and 1 is added to the inactivity counters of any of the active caches have exceeded a predetermined constant value N, the cache floor size of the respective cache(s) is dropped to the value determined by multiplying the cache floor size specified in the virtual cache control table by the corresponding floor size X-factor value.

Assuming the bypass threshold has not been exceeded, a disk operation record counter and hit/miss block flags are cleared. A block counter is then initialized to 1, and the microprocessor receives the relative block address (RBA) for the disk together with the hash number, e.g., 311. The cache status is then initialized to TOTAL HIT. Operations for the initialization of base II are then set-up to enable the cache to communicate with the host processor main store and a search of the directory table is performed in the manner described above with reference to figure 4.

If the requested is not found in the cache directory, the hit flag will be reset as shown in figure 4 thereby indicating a miss. It should be noted that the "hit" flag which is either set or reset in the operation of figure 4 is to be distinguished from the "hit block" or "miss block" flags which are reset at the beginning of the cache algorithm of figures 7A—7D. The hit flag is used to indicate whether or not the present block of data is in the cache, whereas the hit block and miss blocks flags are used to indicate the first block at which a hit or miss occurred, respectively, as will become more clear as the description continues.

Returning to figures 7A—7D, after the directory table search the microprocessor examines the hit flag to determine if the requested data block was found. For a read operation, and assuming the data block was not found and the hit flag was reset, the microprocessor then adds a count of 8 to the record counter to indicate that at least 8 records (1 block) of data will be transferred from the disk to the cache. This number of records is chosen as an example only and may be varied to meet particular system demands. The miss block counter will then be set to a value of 1 and a page will be added to the cache. The microprocessor will then set up the operations required to transfer the missed block from the disk to the cache and will also set

9

up the required operations to transfer the data from the cache to the host processor. Assuming that only a single data block was requested, and that this data block was a "miss", the RBA will be adjusted to the proper starting point for the transfer of the requested data from the disk, the cache status will be set to "miss" and a prefetch calculation will be performed. The system then operates in the manner illustrated in figure 6.

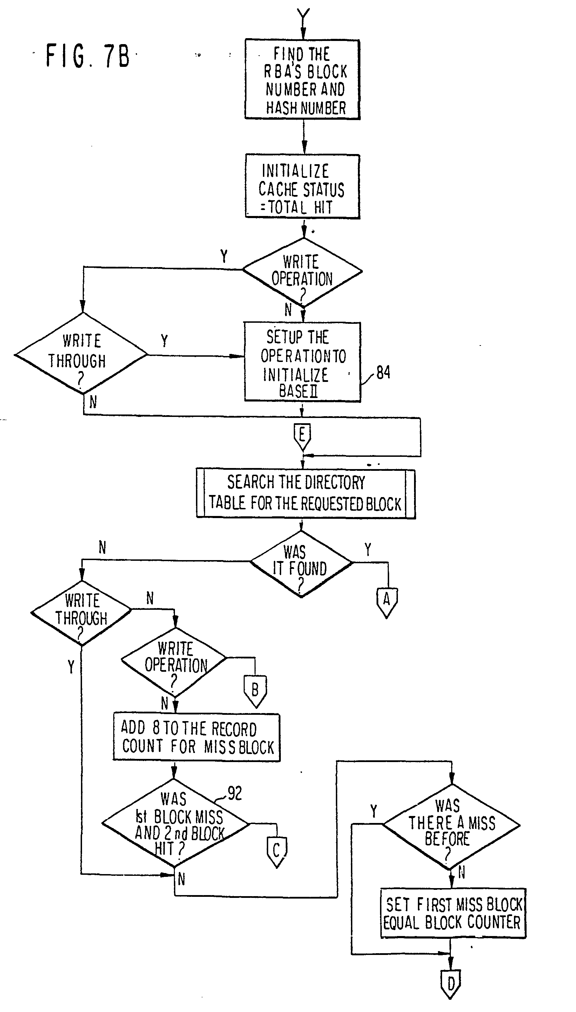

When multiple data blocks are requested, the cache algorithm is implemented such that a three-block "miss-hit-miss" situation is treated as a three block miss, since an overall savings in time will be effected by transferring three blocks of data in one operation rather than transferring two smaller blocks of data in two operations. The detections of the "miss-hit-miss" condition is as follows. Referring back to figures 7A-7D and the following Table 1, prior to initiating the first search of the directory table the disk operation record counter, hit block flag and miss block flag are all cleared and the block counter is initialized to a value of 1. A first search of the directory table is implemented utilizing the hash entry number of the first requested block as determined from the RBA of that block. Assuming that the data block is not found, the hit flag is reset during the directory search shown in figure 4. At the end of the directory search, as shown in figure 7B, the microprocessor examines the hit flag and determines that a "miss" has occurred. Accordingly, the record counter is incremented by 8 in order to indicate that 8 records (1 block) will have to be transferred from disk to cache. The conditions at this point are illustrated at $t_1$ in following table 1.

TABLE 1

| Time | Block Counter | Record Counter | Hit Block Flag | Miss Block Flag | Hit Flag |
|---|---|---|---|---|---|
| $t_1$ | 1 | 8 | 0 | 0 | 0 |
| $t_2$ | 1 | 8 | 0 | 1 | 0 |
| $t_3$ | 2 | 8 | 0 | 1 | 0 |
| $t_4$ | 2 | 8 | 2 | 1 | 1 |
| $t_5$ | 3 | 8 | 2 | 1 | 1 |
| $t_6$ | 3 | 16 | 2 | 1 | 0 |

In the decision operation indicated at 92 in figure 7B, the microprocessor examines the hit block and miss block flags to determine if a "miss-hit-miss" situation has occurred. Since it has not, the microprocessor then checks the hit block and miss block flags to determine if there were any previous misses. Since this is the first data block being requested, the answer is no, and the miss block flag is then set to a value equal to that in the block counter. This situation is illustrated at $t_2$ in Table 1, and it should be noted that the miss block flag indicates the block number at which the first miss occurred. The microprocessor then adds a page to the cache and sets up the disk-to-cache and cache-to-host processor operations required for the transfer of the missed data block.

Since all requested blocks have not yet been checked, the block counter is then incremented by 1 and the block number and hash entry number for the second data block are calculated. The microprocessor then returns to the point in the cache algorithm immediately before the directory search, and the directory search of figure 4 is repeated for the second data block. At this point, the counter and flag conditions are as shown at $t_3$ in Table 1.

The directory is then searched for the second data block and, if found, the hit flag is set and the cache address of this second block is saved as shown in figure 4. Referring again to figure 7B the microprocessor then examines the hit flag and finds that the second block of data was found during the second search, and the microprocessor then branches to path "A" of the algorithm. The LRU table is updated to indicate that this second block of data is now the most recently used block and, since there was no prior hit, the hit block flag is set to a value presently in the block counter, i.e., a count of 2. The conditions at this point are illustrated at $t_4$ in Table 1 with the miss block flags and hit block flags indicating the block numbers of the first miss and first hit, respectively. The microprocessor then sets up the required cache-to-host processor operations for the second data block.

Since all requested data blocks have still not been checked, the block counter is again incremented by 1, the block number and hash entry number for the third data block are calculated, and the microprocessor returns to point "E" in the algorithm immediately before the directory search. The conditions at this point are illustrated at $t_5$ in Table 1. The directory table is then searched according to the procedure illustrated in figure 4 and, assuming that the third requested data block is not found, the hit flag is reset to indicate a read miss. At the end of the directory search operation, the microprocessor examines the hit flag to determine whether or not the third requested data block was found. If it was found, the microprocessor follows the cache algorithm path "A", making the third requested data block the most recently used block in the LRU table. Since there was a previous hit, the setting of the hit block flag is skipped and the cache-to-host processor operations set up for the third data block.

Assuming that the third data block is not found in the directory search, a value of 8 would again be added to the record counter so that, immediately prior to the decision block 92, the counter and flag conditions would be as illustrated at $t_6$ in Table 1. The microprocessor would examine the hit and miss block flags and see that the first block was a miss while the second was a hit thereby resulting in the "miss-hit-miss" condition, and the algorithm path "C" would be followed. The require operations for transferring the second block from disk to cache would be set up and an additional increment of 8 would be made to the record counter to indicate this additional data transfer. A page would be added to the cache to accomodate the missed data block, and the cache algorithm would then be completed as before. Note that no additional page is added to the cache for the second data block since this is merely to be rewritten.

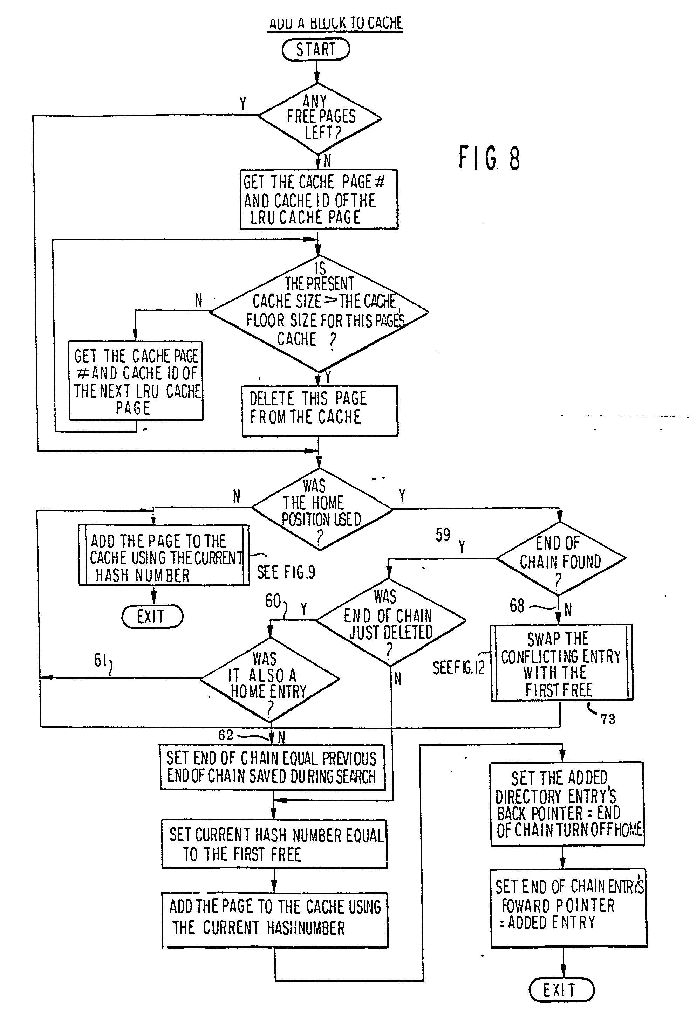

Block 93 in figure 7C represents a portion of the cache algorithm whereby a page is added to the cache for each missed block of data. This will be described in more detail with reference to figure 8. First, the number of free pages remaining in the cache memory are counted. This could be done, for example, by polling (free page counter 54 in figure 3A) or by counting the number of listings in the LRU table having no entry in the directory pointer column. If no free pages are currently available, the cache page number and cache ID of the least recently used cache page for this particular virtual cache are found in the LRU table. If the present size of this virtual cache is greater than the specified cache floor size, the entry found in the LRU table is deleted. If the present cache size has not been exceeded, the specified cache floor size for the particular virtual cache, the cache page number and cache ID of the next entry in the LRU table are found. It is then determined whether the present cache size for that LRU table entry (which may be associated with a different virtual cache) is greater than the specified cache floor size for that virtual cache. The process is repeated until the least recently used page entry for a cache for which the present cache size exceeds the cache floor size is deleted. In this manner, a virtual cache which has not exceeded its cache floor size can "steal" an available page space from another virtual cache for which the cache floor size has already been exceeded.

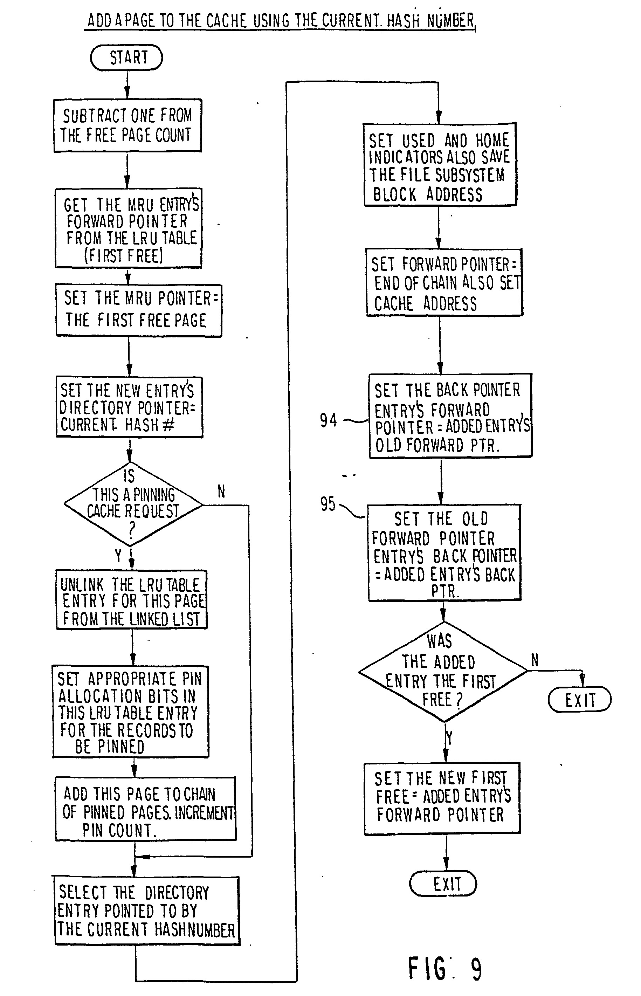

After a page has been selected in this manner, the directory table is examined to determine if the hash entry number corresponding to the block number being added is already used. This can easily be determined by examining the free/used in the first column of the directory table of figure 3A. If the entry is not already used, a page is added to the cache using the current hash number in the simple manner illustrated in figure 9. The free page count is decreased by 1 and the forward pointer of the most recently used entry (which points to the first free page) is examined to determine where the new block of data is to be stored. The most recently used pointer 51 in figure 3B is then set to the value of this new page, and the directory pointer of the new page listing is set to the value of the current hash entry number.

If the present operation is a request to pin data in cache, the entry in the LRU table for this page is unlinked from the linked list of the LRU table. The pin allocation bits are set for the records to be pinned. The page is then added to the chain of pinned pages, after which the pin count is incremented by 1. Next, the microprocessor then goes to the entry of the directory table identified by the current hash entry number and sets the free/used indicator to the "used" state, the home indicator to the "home" state and enters the subsystem block address of the new block. The forward pointer of the new entry is then set to indicate the end of a chain, and the cache address at which the new block of data is to be stored is also entered.

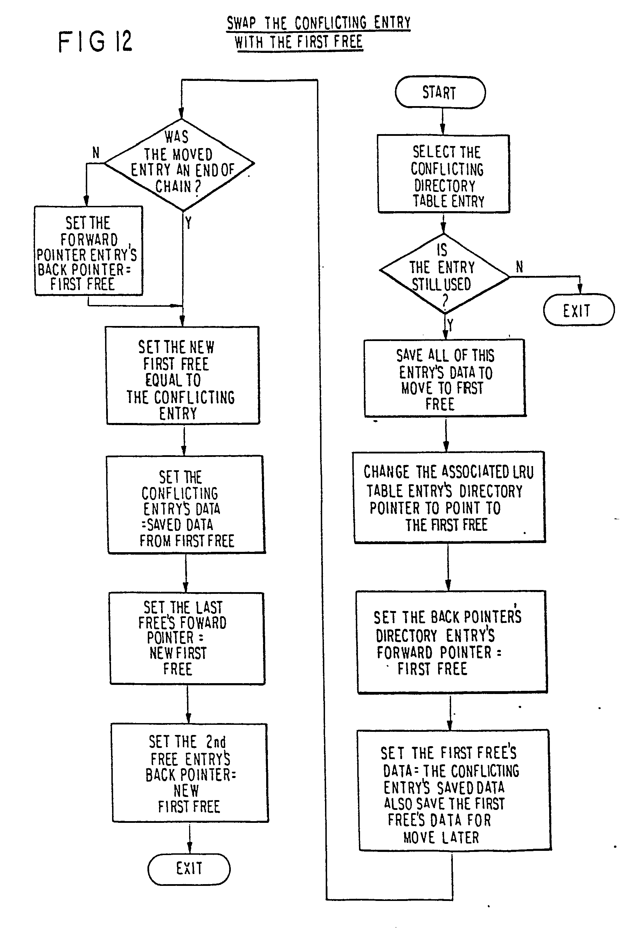

Operations 94 and 95 in figure 9 are required to maintain a proper "free chain", i.e., a chain of free pages. The free, or unused, entries in the directory table are arranged in a chain via their forward and backward pointers, and it is now desired to utilize one of the entries in this chain, i.e., the entry corresponding to the current hahs entry number. Thus, as shown in figure 10A, the various entries may be chained together and it is now desirable to utilize the entry 56. Since this will break the free chain, it is necessary to reroute the chain around the newly used directory table entry. Prior to using this directory table entry, the backward pointer of entry 56 pointed to the previous free entry 57 and the forward pointer of entry 56 pointed to the next free entry 58. In rerouting the chain, the microprocessor follows the back pointer of entry 56 to the entry 57 and then replaces the forward pointer of entry 57 with the original forward pointer of entry 56 so that the forward pointer of entry 57 will now point to entry 58. The microprocessor then follows the original forward pointer of the entry 56 to the entry 58 and replaces the backward pointer of entry 58 with the original backward pointer of entry 56, so that the backward pointer of 58 will now point back to the entry 57. The resulting new free chain configuration is illustrated in figure 10B where entry 56 has now been removed from the chain.

After rearranging the free chain in steps 94 and 95, the microprocessor then determines whether or not the new entry was the first free entry. For example, in figure 10A the first free entry is entry 57. In this case, the microprocessor returns to the cache algorithm of figures 7A—7B. For purposes of conflict list management, however, it is important that the first free pointer 52 in figure 3A correctly designate the first free entry in the free chain. If the newly added data block uses the first free entry in the chain, i.e., entry 57, the new "first free" entry would now be entry 56 which was originally designated by the forward pointer of entry 57. Accordingly, the first free pointer 52 is updated by changing the value therein to the original forward pointer of entry 57. It should be noted that if the seized entry is the first free entry, this entry will be the first in the free chain and will therefore have no backward pointer, so that step 54 will not be necessary and step 55 will merely constitute the erasure of the back pointer in the next entry in the free chain.

Figures 11A—11D illustrate various possibilities which may occur upon adding a new data block to the cache memory. In each of these figures, H indicates that a particular directory table entry is occupied by a "home" entry, and C indicates that a directory table entry is occupied by a "conflict" entry. Figure 10A illustrates the situation described above wherein the current hash entry number i.e., the hash entry number of the new data block, has not already been used in the directory table, so that the only necessary operation is to insert the new data block directory information at this directory table entry and to rearrange the chain of free entries.

Returning again to figure 8, if the microprocessor determines that the some position of the current hash entry number is already occupied in the directory table, additional directory table management operations are required. A first possibility is that the home position of the new data block is already occupied by a home entry which is not part of a conflict list and therefore is itself the end of a chain. During the directory search of figure 4, the microprocessor will have set an End of Chain (EOC) indication and will follow program path 59 in figure 8. If it was necessary to delete a page in cache to make room for the current entry, and if the deleted LRU entry was the entry occupying the home position, the microprocessor will follow program paths 60 and 61 in figure 8. Since the entry previously occupying the home position has been deleted, the position is now free and the new page can be added to the cache using the current hash entry number as previously described in connection with figure 9. The result will again be as shown in figure 11A.

If the EOC entry occupying the home position has not been deleted to make room for the new page, the microprocessor will follow program path 62 in figure 8. The current hash entry number will be replaced by the hash entry number of the first free directory table entry, and the page will be added using this new current hash entry number in the same manner as previously described in connection with figure 9. Further, this entry will now become a conflict entry which is at the end of a chain. Accordingly, the "home" indicator of the new entry position is turned off and the backward pointer is set to point back to the original EOC entry i.e., back to the entry occupying the home position. Finally, the forward pointer of the entry occupying the home position, which previously contained an EOC indication, is now changed to point to the newly added entry. The resulting configuration is illustrated in figure 11B wherein the home position 63 is already occupied by a home entry and the new entry is thus moved to position 64 which was previously the "first free" entry. The forward pointer of entry 63 is changed to point to position 64, the backward pointer of entry 64 is set to point to the position 63, and the "home" indicator at entry 64 is turned off. The forward pointer of entry 64 will be set to indicate an EOC entry as shown in figure 9.

A second possible situation is one in which the home position is already occupied by a home entry which is the first entry in a multiple-entry conflict list. During the directory search of figure 4, the microprocessor will have cycled through the entire conflict list and reached the end of the chain without finding the requested data block. A EOC indication will have been set and the current hash entry number will also have been changed to point to the end of the chain found during the directory search. Since there is already a conflict list beginning a the home entry position of the new data block, the new data block must be added to the end of this conflict list as follows. First, since the EOC indication has been set during the directory search, the microprocessor will follow the program path 59 in figure 8. If the EOC entry in the conflict list has not been deleted to make room for the new page, program path 62 is followed and the new entry is added to the end of the chain in the same manner as described above in connection with figure 11B.

If the EOC entry has just been deleted, it is replaced by the new entry as follows. First, since the previous EOC entry has been deleted, the previous penultimate entry is now the EOC entry so that conflict list. This penultimate entry number was stored by the microprocessor at step 65 in figure 4, and the microprocessor replaces the original EOC entry number with this stored penultimate entry number. After the EOC entry number has been changed in this manner, the current hash entry number is replaced by the "first free" entry number and the new page is added to the end of the chain as before. Figure 11C illustrates the situation in which the home position 63 of the new data block is already occupied by a home entry which is the first entry in a conflict list comprising entries 63 and 64. The hash entry number will already have been reset to equal the EOC entry at the end of the directory search of figure 4, so that the entry of the new data block according to the program of figure 8 will first be attempted at conflict position 64. If the conflict entry at position 64 has just been deleted, the new data block will be entered there. If not, the new entry will be made at position 66 and the positions 64 and 66 will be linked together via the forward pointer of entry and the backward pointer of entry 66.

The last and simplest possibility is that the home position of the new entry is occupied by a conflict entry. In this case, the program path 67 will have been followed during the directory search of figure 4 and no EOC indication will have been set. Accordingly, the microprocessor will follow path 68 in figure 8 and the conflicting entry will be moved to the first free entry position while the new entry is inserted at its home position. This situation is illustrated in figure 11D wherein 63 again indicates the home position of the new entry. This position 63 was already occupied by a conflict entry which is the second entry in a conflict list comprising entries 69, 63 and 71, in that order. In this situation, the conflict entry originally existing at 63 is moved to the first free entry position 72 and the forward pointer of entry 69, backward pointer of entry 71 and forward and backward pointers of entry 72 are adjusted to maintain the continuity of the conflict list.

12

Once the conflict entry has been removed from position 63, the new entry can be made at its home position.

The technique for rearranging the directory table entries in the manner illustrated in figure 11D will be described in more detail with reference to the flow chart of figure 12 which corresponds to step 73 in figure 8. First, the conflicting directory table entry is selected by the microprocessor and in the LRU table of figure 3B, and this position should not be upset merely because the data is being moved from one directory table entry to another. Accordingly, the microprocessor goes to the LRU table entry corresponding to the directory table entry position 63 and changes the directory pointer in that LRU listing to point to the first free directory table 72. Thus, entry 72 will now occupy the same priority position in the LRU table as was previously occupied by entry 63.

Next, the microprocessor goes to the entry 69 indicated by the backward pointer of 63 and changes the forward pointer of entry 69 to indicate the first free entry 72. Next, the data originally in the entry 63, including the used indicator, conflict indicator, file subsystem block address, backward pointer, forward pointer and cache address, are all transferred to the first free entry position 72. If the page can be added to the cache using the current hash entry number.

Returning again to figure 7C, after the microprocessor has cycled through all of the requested data blocks and reached the point 75, and assuming again the "miss-hit-miss" situation described above, the microprocessor will have added two new pages to the cache memory to receive the missed data blocks 1 and 3, and it will have set up all of the required operations for transferring the requested data from disk-to-cache and cache-to-host processor. Since a read operation has been requested, and since at least one of the requested data blocks was a miss, program paths 76 and 77 will be allowed in figure 7C. The purpose of path 77 is to maximize the efficiency of the cache memory by transferring additional unrequested data blocks into the cache memory in circumstances where there is a statistical probability that these additional data blocks will also soon be requested.

Consider the following typical operating sequences:

CASE I: 122, 123, 124, 125, 126

CASE II: 122, 123, 1594, 720, 124, 14, 125, 1595, 126

CASE III: 127, 128, 129, 130, 131

Wherein the numbers given for each case represent RBA locations in a series of read disks data requests. For a fixed block length of eight, it will be noted that all items in CASE I are associated with block 15 which includes TBAs 120—127. Thus, the first RBA in CASE I is relative item 3 in block 15 and the last requested RBA is relative item seven in that same block.

In CASE II, the same five RBAs have been requested, with the addition of other RBA locations from different blocks. In both examples, however, the host processor has requested data from a short ascending sequence of RBA locations. The time for completion of the sequence is relatively short, generally within a span of two hundred disks references or less, and the given sequence of RBAs 122—126 may be repeated or partially repeated a few hundred disks requests later. Assuming that at the beginning of operation block 15 is not in the cache memory, a read miss will occur for RBA 122 and all records in block 15 will be transferred into the cache memory. The first request will thus involve a performance penalty while block 15 is being transferred into the cache memory, but the following requests for RBAs 123—126 will result in read hits involving considerable performance advantage. Empirical evidence suggests that it is very unlikely to encounter in the near future a request for RBAs 120 or 121, and these items are thus kept in the cache memory at a small penalty. The penalty in storing records 120 and 121 could be avoided by storing a block of data in the cache memory starting with the first requested record, but this would be highly impractical in terms of system complexity.

The "prefetch" operation implemented by path 77 of figure 7C is generally directed to the type of operation indicated in CASE III. In CASE III, the request for record 127 will result in a read miss causing all of block 15 to be transferred from disk to cache. The next request for RBA 128 is not a part of block 15, however, and this request will result in a read miss so that block 16 will be brought into the cache storage. Thus, two independent disk read operations would be required in CASE III. This problem in CASE III is one of improper alignment between the boundaries of the fixed block adopted for disk/cache storage and the boundaries of the sequential reference pattern issued by the user.

In order to avoid the requirement of two independent disk read operations in CASE III, an additional block or blocks of data may be transferred to the cache memory during the first disk read operation.

The statistical probability is considered to be a function of position in a particular block of the last record of the current operation requested by the host processor. The prefetching operation is thus based upon a threshold comparison of the requested record location within a fixed block boundary. As an example, the threshold could be set at the 5/8 location within a block. In the case of block 15, the threshold would be at RBA location 124 which is the fifth record in the block. Read miss requests for RBAs 120—123 would not meet the threshold criterion and only block 15 would be transferred to the cache, while read miss requests for RBAs 124—127 would satisfy the threshold criterion and data from both blocks 15 and the immediately following block 16 would be brought into the cache, assuming that block 16 is not already stored in the cache memory. The determination of the record position within its block would be a simple matter, i.e. the block number is determined by dividing the block length into the RBA, and the remainder would be the relative record position in the block.

Studies have indicated that appropriate values for a desirable block length are in the range of 8 to 24 records. If is often the case that only part of the original sequence may be repeated, and this will occur more often in the case of relatively long sequences. If only a portion of the original sequence is repeated, it may be desirable to maintain the repeated portion in the cache memory while deleting the remainder of the sequence, and this would be impractical if the fixed block length were very long, e.g., 24 records. Accordingly, it is preferable to maintain more "granularity" by storing a long sequence as multiple, fixed length data blocks. Each individual data blocks is then subject to independent management as to how long it is retained in the cache waiting for a future request. Some blocks may be deleted if no future request is received, while other blocks brought into the cache at the same time will be maintained if a repeat request occurs in the near future. Thus, a fixed block length of eight records has been chosen and the effective block length is varied by sometimes transferring multiple fixed blocks.

While it is possible to utilize only a single threshold to determine the possible transfer of a single additional data block as described above, it is preferable to utilize a two-threshold technique wherein each threshold occurs at a different location within the previously described fixed length block. The two thresholds are designated $T_2$ and $T_2$, respectively, where $T_2$ is greater than or equal to $T_1$. Satisfying the threshold $T_1$ comparison results in a decision to read two sequentially located data blocks from the disk and store them in the cache memory, the first block containing the last record in the read miss request and the second block being the next block immediately following the original block containing the requested record. Satisfying the threshold $T_2$ comparison results in a decision to read three sequentially located data blocks from the disk and store them in the cache memory with the first of these sequentially located blocks containing the requested data record.

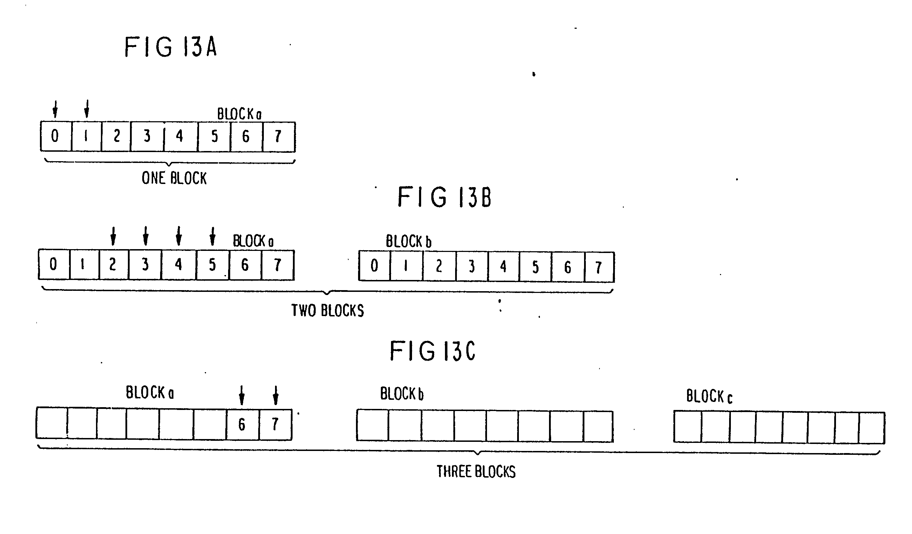

It should be noted that where a single read request involves multiple records, the prefetch operation will be performed only if the last requested record is a read miss, and the threshold comparison for the prefetch operation is only applied to the position of the last requested record in its respective data block. More particularly referring to figures 13A—13C, there are eight records in each block. If records 0 and 1 of block A are requested by the host processor as illustrated in figure 13A, the entire block containing the requested records will be transferred to the cache memory. If any one of records 2—5 in block A is requested as in figure 13B, not only block A but also the succeeding block B will be transferred to the cache memory. Finally, if either of records 6 or 7 in block A is requested as illustrated in Figure 13C, blocks B and C in addition to block A will be transferred to the cache memory. This type of operation, herein referred to as "prefetch", is due to the relatively high probability that records from a succeeding block B of data will be requested in subsequent I/O operations when records from the latter three-fourths of block A have been requested, and that records from block C may also soon be requested when records in the last one-fourth of block A have been requested in the present I/O operation.

If R denotes the relative location of a particular record within a fixed block, the value of R will range between 0 and 7 when the block length is 8. For $R < T_1$, only the requested data block is transferred, for $T_1 \leqq R < T_2$ the requested data block and the following block are transferred, and for $R \geqq T_2$ the requested data block and the following two blocks are transferred. The average effective block length will be determined by the levels of $T_1$ and $T_2$. For instance, with $T_1 = T_2 = 8$, neither of the thresholds can ever be equalled and every transfer will involve a single block of eight records, while for $T_1 = T_2 = 0$ both thresholds will always be equalled and every transfer will involve three data blocks of 24 total records. With $T_1 = 2$ and $T_2 = 6$, one-fourth of the transfers will involve only 8 records, one-half of the transfers will involve 16 records and one-fourth of the transfers will involve 24 records, thereby resulting in an average effective block length of 16 records. The following table, given by way of example only, indicates representative values of $T_1$ and $T_2$ and the resulting average effective block lengths in following Table 2:

# EP 0 114 944 B1

## TABLE 2

| Value of $T_1$ | Value of $T_2$ | Average Effective Block Length |
|---|---|---|
| 8 | 8 | 8 |
| 6 | 8 | 10 |
| 4 | 8 | 12 |
| 2 | 8 | 14 |
| 2 | 6 | 16 |
| 2 | 4 | 18 |
| 0 | 4 | 20 |
| 0 | 2 | 22 |
| 0 | 0 | 24 |

Assuming an infinite cache memory capacity, it will be easily appreciated that longer average effective blocks lengths would result in improved performance advantages. The longer blocks lengths would result in transferring more data into the cache memory with a resulting higher probability of a future read hit. From a practical standpoint, however, longer average effective blocks lengths will improve the cache memory efficiency only up to a certain point after which increasing block length will decrease the performance advantages. This is due to the storage of excessive amounts of additional information of marginal recall probability, thus occupying memory capacity which could be better used for higher probability information. There will generally thus be some optimal average effective block length which can be achieved by proper setting of the thresholds $T_1$ and $T_2$. One set of threshold levels generally suitable is that described above wherein the position of the requested record in the last one-fourth of its data block will result in transferring a total of three blocks while the position of the requested record in the second and third quarters of its data block will result in transferring a total of two blocks. However, the desirability of utilizing larger average effective lengths will depend on the average length of a sequence of records requested by the host processor. If the average sequence length is very long, longer average effective block lengths will improve performance advantages.

Unfortunately, there is no way of knowing ahead of time which average effective block length will be optimal for a given customer and, in addition, the value of the optimal block length will change from task-to-task with any given customer. It may be desirable, therefore, to provide dynamic control of the threshold levels in order to optimize the performance. This could be done by continually evaluating a variety of aspects of the system performance and changing the threshold values accordingly, but in the preferred embodiment of this invention a much simpler technique is chosen whereby the threshold levels are continually varied in accordance with the read hit ratio which is one of the most important measures of the system efficiency. The read hit ratio is a measure of the percentage of read requests which result in a read hit.

One technique for dynamically adjusting the threshold values $T_1$ and $T_2$ will now be described. In a relatively straightforward manner, the microprocessor may include a counter for counting the number of disk accesses, a second counter for counting the number of disk read accesses and a third counter for counting the number of read hits. The microprocessor will then compute a read hit ratio by dividing the number of read hits by the number of read accesses. The calculation of the read hit ratio will only be performed when at least 1,000 disk accesses have occurred, at least 250 read accesses and at least 50 read hits have occurred. Once all of these minimums have been met, the read hit ratio is calculated and all three counters are reset to zero. The cycle continues until all three minimums are again met and a new read hit ratio is calculated.

The average effective block length can be varied in accordance with the calculated read hit ratio by varying the threshold levels $T_1$ and $T_2$. Thus, these two threshold parameters can be set at preselected initial values and a read hit ratio is calculated after the above-described minimums have occurred. It should be noted that the number of read hits is the only quantity influenced by the selection of thresholds $T_1$ and $T_2$.

After a first read hit ratio has been calculated, a new set of thresholds $T_1$ and $T_2$ are selected in such a manner as to make a single step increase in the average value of the effective length. A new read hit ratio is calculated and compared to the previous calculated value and, if the new read hit ratio is larger, the parameters $T_1$ and $T_2$ are again altered to as to achieve a further single step increase in the average

15

effective block length.

This changing of the threshold values continues until the newly calculated read hit ratio is smaller than the previous calculated value, at which time the threshold values are changed back to the previous level where the optimum read hit ratio occurred. If desirable, a confirmation cycle may be undertaken after changing the threshold values back to the previous values, with the confirmation cycle lasting for a period of twice the normal evaluation period to confirm that the latest threshold values do still result in the best read hit ratio.

The finally selected threshold parameters may be maintained for a period of time of 20 or more standard evaluation intervals at the end of which a new evaluation cycle is undertaken to again determine the optimal threshold settings corresponding to a maximum read hit ratio. In these subsequent evaluations, the threshold levels will be changed so as to either increase or decrease the average effective block length until the read hit ratio reduces. The average effective block length will then be changed in the opposite direction until the read hit ratio reduces, to ensure that the optimum threshold values have been found, and a confirmation cycle is then conducted at the best threshold levels to ensure that they are still preferable.

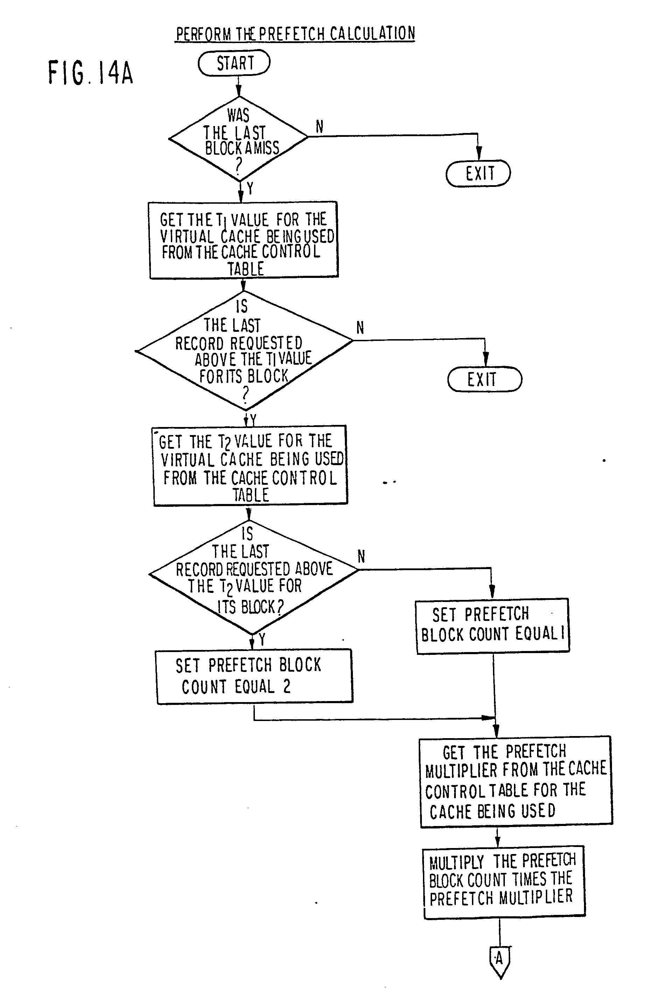

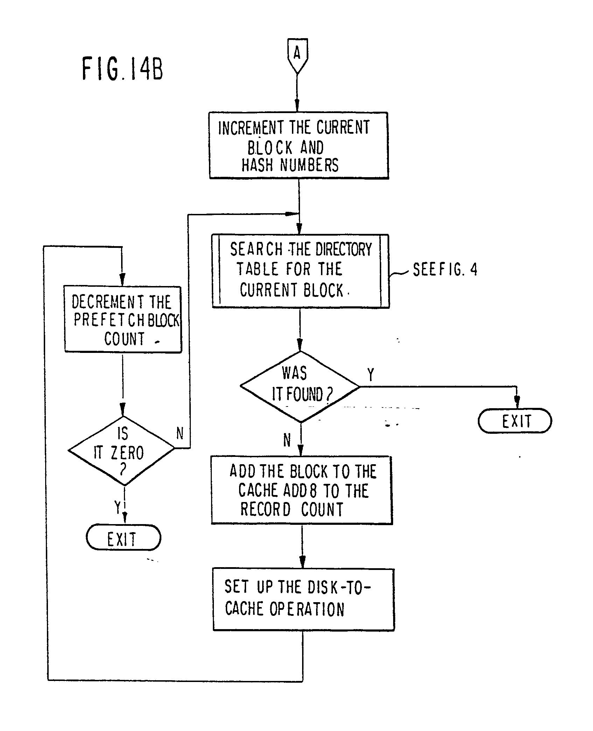

Referring now to figure 7D, if none of the blocks was a miss, there would be no disk-to-cache operation necessary, and the microprocessor would exit the cache algorithm. Since a miss has occurred, however, the microprocessor prepares for the disk-to-cache operations by setting the starting RBA and by setting the cache status to "miss". Before beginning disk-to-cache transfer, the microprocessor performs a "prefetch" calculation to determine if any additional blocks of data should be transferred as will be explained in more detail with reference to figures 13 and 14.

Figure 14 is a flow chart of the prefetch calculation. In the preferred embodiment of this invention, the prefetch operation will only be performed if the last block of a series of requested blocks is not found in the cache memory. If the last block is a hit, the cache algorithm is ended, the controller operation proceeds as illustrated in figure 6 and only the missed data blocks are transferred.

Assuming that the last requested block was a miss, the microprocessor then determines whether the value R for the last requested record is above the $T_1$ value for its block. If it is, it is similarly determined whether the value R is above the $T_2$ value. If it is above $T_1$ but below $T_2$, the prefetch block count is set equal to 1 while, on the other hand, if R is greater than $T_2$, the prefetch block count is set equal to 2. The prefetch multiplier is then taken from the cache control table for the particular virtual cache and the prefetch block count multiplied by the prefetch multiplier. The microprocessor then increments the current block and hash entry numbers and performs a directory table search for block B in the manner set forth in figure 4. If block B is found to be already in cache, the cache algorithm is ended and controller operation proceeds as in figure 5. Even if the last quarter of block A is requested, there is insufficient advantage in transferring block C to cache if block B is already resident in cache.

If block B is not found in cache, a new page is added via the process of figure 8, and the record count is incremented by eight to indicate the transfer of an additional block. The prefetch block count is then decremented by 1 and, if there was only one prefetch block requested, the cache algorithm is ended and the requested blocks together with the additional block B are transferred to cache. If two prefetch blocks have been indicated, the current block and hash entry numbers are again incremented and a search for block C conducted. If block C is not found in cache, a further page is added to cache according to the process of figure 8, and the record count is again incremented by 8.

Returning again to figure 6, after the cache algorithm is completed for a read operation, the microprocessor checks to determine if the bypass factor has been exceeded. If the bypass factor has been exceeded, the microprocessor will have set a cache status indication at 78 in figure 7A and the cache algorithm will have been ended at that point. Subsequently, in the operation illustrated in figure 6, the microprocessor need only examine this cache status indication and, if the bypass threshold has been exceeded, the operations required to transfer the data directly from disk to host processor are set up in a conventional manner. The file operation 79 is only necessary if data is to be transferred to or from the file, i.e. the attachement disk or disks. This is unnecessary in the case of a total hit. All data transfer operations are then executed and the controller operation is ended by setting the interrupt request.

If the bypass threshold has not been exceeded, the microprocessor follows program path 81 in figure 6 and, if a "total hit" has occurred, i.e., all requested data blocks have been found in cache, the cache-to-host processor transfer operations set up in the cache algorithm are executed and the controller operation is ended. The changing of the newly requested data blocks to most-recently-used status in the LRU table will have already been accomplished in program path A in the cache algorithm of figures 7A—7D.

If the bypass threshold has not been exceeded and a miss has occurred, the file operation is issued, data transfer operations are executed and the controller operation is terminated.

The description thus far has concerned primarily a "read miss" situation in which at least one requested block of data has not been found in the cache memory. A read hit operation is significantly less complicated since the contents of the cache need not be updated. In the cache algorithm of figures 7A—7D, the path A will have been followed and the only memory management operation, i.e., the updating of the requested data blocks to most-recently-used status will be performed at 82 in figure 7C. Assuming the bypass threshold has not been exceeded and a total hit has occurred, the microprocessor will follow program path 83 in figure 6, and the operations will be executed to transfer the requested data from the cache to the host processor.

At some time the host processor may wish to write into a disk memory location to replace old data. In such a case, assuming that a cache is installed and a cache operation requested as indicated in figure 6, the cache algorithm of figures 7A—7B is performed. The write through and write operation flags are set to indicate a write through operation, and the request is examined to see if the bypass factor has been exceeded. If so, the write-through flag is reset to indicate that the data is to be transferred directly from the system to the disk file without going through the cache memory. The directory search is then performed in the same manner as described above in conjunction with a read operation. In the flow chart illustrated in figure 7B, step 84 is skipped for a non-write-through write operation since the host processor will not write into the cache. For write through wherein it is necessary to write into the cache memory, the cache will have to interface with the host processor main storage and step 84 should not be skipped.

Assuming the cache does not contain any data from a disk location into which the host processor wishes to write, and assuming the bypass threshold has been exceeded and the write-through flag reset, program paths 85, 75 and 86 are followed to the end of the cache algorithm. Referring again to figure 6, for a non-write-through write operation, the microprocessor sets up the operations required to transfer data directly from the host processor to the disk, the data transfer operations are executed and the controller operation is terminated with an interrupt request.

If a write miss occurs and the bypass threshold has not been exceeded, write through is to be implemented and path D is followed in figure 7. If the data to be written is less than a full block, operations are set up to transfer the data directly from the host processor to the disk file. If the data to be written is a full block, a page is added to cache in step 53, the system-to-cache transfer operations are then set up, followed by the cache-to-disk operations in path F.

If a "write hit" occurs, i.e., data from at least one of the disk file locations to be written into is presently stored in the cache memory, program path 87 is followed in figure 7C if the bypass threshold has been exceeded and any pages in the directory and LRU table corresponding to the disk memory location being written are deleted.

If the bypass threshold has not been exceeded so that write through operation is still in effect, the LRU table is updated in step 82 of figure 7C and the cache-to-disk transfer operations are set up in path F.

If several blocks of data are to be written and the bypass factor not exceeded, the system-to-cache operations for all full block misses will be set up in Figure 7C. For hit blocks, it is still necessary to write into the cache to update the data already stored there, and this is accomplished in path H of figure 7D for all except the last block. If the last data block to be written is a hit, the system-to-cache operations are set up in Path J.

After finishing the cache algorithm for a write operation, the microprocessor continues according to the chart of figure 6. If the bypass threshold has not been exceeded, all necessary data transfer operation will have been set up in the cache algorithm and need merely be executed. However, data cannot be transferred to the disk file from cache until the cache contents are updated. Accordingly, all system-to-cache operations are first executed, the file operation is then issued to prepare the disk file to receive the data, and finally the cache-to-disk and system-to-disk operations are executed.

If the bypass threshold has been exceeded and the write-through flag reset, no system-to-disk operations will have been set up and this must be done in step 88 in figure 6, followed by the issuing of the file operation and the execution of all transfer operations.

Referring now to figures 14A and 14B, the procedure for unpinning a page in cache, referred to briefly in the initial discussion of the cache algorithm of figures 7A—7D, will now be discussed in detail. If all pinned pages are to be unpinned, the pin pointer 53 and pin counter 55 are used to remove all of the pages in the pinned list and to place them back in the list of free pages. All pinned pages are cleared from the directory. On the other hand, if only some of the pinned pages are to be unpinned, the directory table is searched for the block to be unpinned. If the requested block is not in the cache, the procedure is finished, while if the requested block in fact is in the cache memory, the pin allocation bits for the particular records to be unpinned are reset. If all eight records in the block are to be unpinned, the page is put back into the free page list and removed from the directory of pinned pages and from the pinned listing of the LRU table. The pin counter 55 is then decremented by 1. If, on the other hand, all eight records in the block are not to be unpinned, the page remains in the list of pinned pages.

With this unpinning procedure of the invention, undesirable unpinning of pages is prevented. For instance, if a particular page in the pinned list contains records forming parts of two different data runs desired to be pinned, and later it is desired to delete the data of one of the data runs, if one were to delete all pages involved with the to-be-deleted data run, data records would be deleted from the pinned list which should have remained pinned as they belong to a data run which should be retained. However, in accordance with the procedure of the invention wherein a pin allocation bit is provided for each record in the pinned pages, it is ensured that only pages for which all eight records are no longer required to be pinned are deleted.

**Claims**

1. A method for controlling a single physical cache memory to provide multiple virtual caches in a data processing system including a host processor (10), a data file (16) in which are stored a plurality of pages of data each of which is composed of a plurality of data records, and an I/O controller (20) for controlling the transfer of requested data records between said host processor and said file, said I/O controller comprising said single physical cache memory (42) and said host processor being capable of simultaneously performing, on a time-sharing basis, a plurality of different types of data processing tasks; said method comprising the steps of:

dividing said cache memory into a plurality of virtual caches, each said virtual caches being associated with a different one of said data processing tasks,

adjusting the sizes to be assigned to the different virtual caches in accordance with at least two different sets of cache management algorithms for obtaining optimum performance in the processing of tasks, and

transferring from said file into each of said virtual caches amounts of data in accordance with the size of the assigned virtual cache for at least some requests of the associated processing task.

2. The method according to claim 1, wherein similar algorithms but containing different values of operating parameters are used for controlling the sizes of some of said virtual caches.

3. The method according to claim 1, wherein algorithms differing functionally from one another are used for controlling the sizes of some of said virtual caches.

4. The method according to any one of claims 1 to 3 wherein said step of adjusting the sizes of said virtual caches comprises setting a size of at least one of said virtual caches in accordance with at least a frequency of use of said virtual cache by said host processor (10).

5. The method according to claim 4, wherein said step of setting the size of said at least one virtual cache is further in accordance with a cache floor size specified by said host processor (10).

6. The method according to claim 5, wherein said step of setting the size of said at least one virtual cache comprise the steps of:

determining when said at least one virtual cache has not been used in a predetermined number of accesses of said file (16) by said host processor (10); and

reducing the size of said at least one virtual cache to a size determined by multiplying said cache floor size by a constant value specified by said host processor.

7. The method according to any one of claims 1 to 6 further comprising the step of retaining in at least one of said virtual caches as pinned data at least one page of data specified by said host processor (10), independently of a frequency of usage of said at least one page of data.

8. The method according to claim 7, further comprising the step of:

for each page of data pinned in said cache memory (42), maintaining a list of pin allocation bits comprising one binary bit for each record contained in said pinned page; and

setting ones of said binary bits to a predetermined state for all records within said pinned page which are required to be pinned.

9. The method according to claim 8, further comprising the step of unpinning pages in said cache memory (42) in response to an unpinning instruction from said host processor (10) indicative of a run of data to be unpinned.

10. The method according to claim 9, wherein said step of unpinning comprises the steps of:

for each data run to be unpinned, examining said pin allocation bits to determine whether any of said pin allocation bits are in said predetermined state for data records within said page other than in said data run to be unpinned; and

unpinning only pages in which none of said pin allocations bits are set in said predetermined state outside said data run to be unpinned.

11. The method according to any one of claims 1 to 10 further comprising adjusting the relative sizes of at least some of said virtual caches in accordance with at least an order of usage of entries stored in said virtual caches.

12. The method according to claim 11, wherein said step of adjusting the sizes of said virtual caches comprises the steps of:

maintaining a list of pages of data in at least predetermined ones of said virtual caches including an indication of the order of previous usage of said pages of data; and

eliminating from among all said predetermined virtual caches at least recently used page of data when a sum of said sizes of said predetermined virtual cache exceeds a predetermined limit and it is desired to transfer a further page of data into one of said predetermined virtual caches.

13. I/O controller (20) in a data processing system including a host processor (10) able of simultaneously performing a plurality of different types of data processing tasks, a data file (16) in which are stored a plurality of pages of data each of which being composed of a plurality of data records, said I/O controller controlling the transfer of requested data records between said host processor and said file and comprising a single physical cache memory (42), said controller being characterized in that it comprises:

control means (33) for operating said physical cache memory as a plurality of different virtual caches assigned to different functional types of data processing tasks, and for adjusting the number of cache memory locations assigned to said different virtual caches in accordance with at least two different sets of cache management algorithms for obtaining optimum performance in the different functional processing tasks.

# EP 0 114 944 B1

## Patentansprüche

1. Methode zum Steuern eines einmaligen mechanischen Pufferspeichers, um eine Vielzahl von virtuellen Pufferspeichern bereitzustellen in einem Datenverarbeitungssystem, zu dem ein Verarbeitungsrechner (10), eine Datei (16) mit einer Vielzahl von Datenseiten, jeweils aus einer Vielzahl von Datenblöcken bestehend, sowie eine Eingabe-/Ausgabe-Steuereinheit (20) gehören, um die Übermittlung von verlangten Datenblöcken zwischen dem genannten Verarbeitungsrechner und der genannten Datei zu steuern, wobei die genannte E/A-Steuereinheit einen einzigen Hardware-Pufferspeicher (42) aufweist und der genannte Verarbeitungsspeicher fähig ist, gleichzeitig auf einer Time-Sharing-Basis eine Vielzahl von Datenverarbeitungsaufgaben verschiedener Art auszuführen, wozu die genannte Methode folgende Schritte umfasst:

Unterteilung des genannten Pufferspeichers in eine Vielzahl von virtuellen Puffern, wobei jeder dieser virtuellen Puffer einer anderen der auszuführenden Datenaufgaben zugeordnet ist,

Anpassung der Grösse, die den verschiedenen virtuellen Puffern zuzuteilen ist, wobei zumindest zwei verschiedene Sätze Puffereinrichtungsalgorithmen vorzusehen sind, um einen optimalen Wirkungsgrad bei der Aufgabenverarbeitung zu erhalten, und

Übermittlung von Datenmengen aus der genannten Datei in die genannten virtuellen Puffer, wobei diese Mengen für zumindest einige Forderungen der dazugehörigen Verarbeitungsaufgaben der Grösse des zugewiesenen virtuellen Puffers entsprechen.

2. Methode nach Anspruch 1, bei der ähnliche, jedoch andere Operator-Werte enthaltende Algorithmen zum Steuern und zur Kontrolle der Grösse einiger der genannten virtuellen Puffer benutzt werden.

3. Methode nach Anspruch 1, bei der Algorithmen, die sich funktionell voneinander unterscheiden, zur Kontrolle der Grösse einiger der genannten virtuellen Puffer benutzt werden.

4. Methode nach allen der Ansprüche 1 bis 3, bei der der genannte Schritt zum Anpassen der Grösse der genannten virtuellen Speicher darin besteht, die Grösse zumindest eines der genannten Puffer im Hinblick auf eine Benutzungshäufigkeit dieses Puffers durch den genannten Verarbezitungsrechner (10) festzusetzen.

5. Methode nach Anspruch 4, bei der der genannte Schritt des Festsetzens der Grösse von zumindest einem virtuellen Puffer des weiteren im Zusammenhang mit einer vom genannten Verarbeitungsrechner (10) spezifierten Pufferabmessungsgrösse steht.

6. Methode nach Anspruch 5, bei der der genannte Schritt des Festsetzens der Grösse von zumindest einem der genannten virtuellen Puffer folgende weitere Schritte aufweist:

Feststellen, ob zumindest ein virtueller Puffer während einer vorbestimmten Anzahl von Zugriffen zur genannten Datei (16) durch den Verarbeitungsrechner (10) nicht benutzt wurde, und

Verminderung der Grösse zumindest eines der genannten virtuellen Puffer auf eine Grösse, die durch Multiplizierung der genannten Pufferabmessungsgrösse mit einem konstanten, vom genannten Verarbeitungsrechner erstellten Wert bestimmt wird.

7. Methode nach allen der Ansprüche 1 bis 6, die weiter einen Schritt aufweist, bei dem in zumindest einem der genannten virtuellen Puffer mindestens eine Datenseite, die vom genannten Verarbeitungsrechner (10) spezifiert wird, unabhängig von der Zugriffshäufigkeit zu dieser Datenseite als fixierte Daten zurückgehalten wird.

8. Methode nach Anspruch 7, die weiter für jede Seite mit im genannten Pufferspeicher (42) fixierten Daten einen Schritt aufweist, bei dem eine Liste von Fixier-Zuweisungsbits aufbewahrt wird, die ein binäres Bit für jeden auf der genannten fixierten Seite enthaltenen Block umfasst, und bei dem die genannten binären Bits für alle zu fixierenden Blöcke, die sich auf der genannten fixierten Seite befinden, auf ein vorbestimmtes Niveau gesetzt werden.

9. Methode nach Anspruch 8, die weiter einen Schritt aufweist, bei dem die Fixierung der genannten Seiten im Pufferspeicher (42) aufgehoben wird als Antwort auf eine Löseanweisung vom genannten Verarbeitungsrechner (10), die sich auf einen Lauf von freizusetzenden Daten bezieht.

10. Methode nach Anspruch 9, bei der der genannte Löseschritt der Fixierung in folgende Schritte unterteilt wird:

für jeden freizusetzenden Datenlauf, Untersuchung der genannten Fixier-Zuweisungsbits, um festzustellen ob eines der genannten Fixier-Zuweisungsbits sich auf dem vorbestimmten Niveau befindet für Datenblöcke auf der genannten Seite, die sich aber nicht in dem freizusetzenden Datenlauf befinden; und

Freisetzung der alleinigen Seiten, auf denen keine der genannten Fixier-Zuweisungsbits auf das vorbestimmte Niveau ausserhalb der genannten freizusetzenden Datenläufe gsetzt ist.

11. Methode nach allen der Ansprüche 1 bis 10, die weiter eine Anpassung der relativen Grösse von zumindest einigen der genannten virtuellen Puffer aufweist, wobei zumindest die Grössenordnung der Benutzung der in diesen virtuellen Puffern gespeicherten Eingaben berücksichtigt wird.

12. Methode nach Anspruch 11, bei der der genannte Schritt der Grössenanpassung der virtuellen Puffer in folgende Schritte unterteilt wird:

Erhalt einer Liste von Seiten mit Daten in zumindest einigen der genannten vorbestimmten virtuellen Puffer einschliesslich Angabe der Grössenordnung der vorherigen Benutzung der genannten Datenseiten,

19

und

aus allen genannten vorbestimmten Puffern, zumindest Ausscheidung der vor kurzem gebrauchten Datenseiten, wenn die Summe der genannten Grössen der vorbestimmten virtuellen Puffer einen vorbestimmten Grenzwert überschreitet und es gewünscht wird, eine weitere Datenseite in einen der genannten virtuellen Puffer zu übertragen.

13. Eingabe-/Ausgabe-Steuereinheit (20) in einem Datenverarbeitungssystem, bestehend aus einem Verarbeitungsrechner (10), der gleichzeitig eine Vielzahl von Datenverarbeitungsaufgaben verschiedener Art durchführen kann, und einer Datei (16), in der eine Vielzahl von Datenseiten gespeichert sind, die jeweils aus einer Vielzahl von Datenblöcken bestehen, wobei die genannte E/A-Steuereinheit die Übermittlung verlangter Datenblöcke zwischen dem genannten Verarbeitungsrechner und der genannten Datei steuert, einen einzigen Hardware-Pufferspeicher (42) aufweist und weiter durch folgende Komponenten gekennzeichnet ist:

Steuermittel (33) zum Betreiben des genannten Hardware-Pufferspeichers in Form einer Vielzahl verschiedener virtueller Puffer, die verschiedenen Funktionsarten der Datenverarbeitungsaufgaben zugeteilt sind, und um die Anzahl der Pufferspeicherstellen, die den verschiedenen virtuellen Puffern zugewiesen sind, unter Berücksichtigung von zumindest zwei verschiedenen Puffereinrichtungsalgorithmensätzen anzupassen mit dem Ziel, einen optimalen Wirkungsgrad für die verschiedenen funktionellen Verarbeitungsaufgaben zu erhalten.

## Revendications

1. Une méthode de commande d'une mémoire antémémoire physique unique pour créer des antémémoires virtuelles multiples dans un système de traitement de données comprenant un processeur principal (10), un fichier de données (16) dans lequel sont emmagasinées une pluralité de pages de données, chacune d'elles étant composée d'une pluralité d'enregistrements de données, et une unité de commande E/S (20) pour commander le transfert d'enregistrements de données requis entre ledit processeur principal et ledit fichier, ladite unité de commande E/S comprenant ladite mémoire antémémoire physique unique (42) et ledit processeur principal pouvant exécuter simultanément sur une base de temps partagé, une pluralité de types différents de travaux de traitement de données, ladite méthode comprenant les étapes suivantes:

la division de ladite mémoire antémémoire en une pluralité d'antémémoires virtuelles qui sont chacune associées à un travail différent desdits travaux de traitement de données,

l'ajustement des tailles à attribuer aux antémémoires virtuelles différentes selon au moins deux ensembles différents d'algorithmes de gestion d'antémémoire pour obtenir des performances optimales dans le traitement des travaux, et

le transfert dudit fichier dans chacune desdites antémémoires virtuelles de quantités de données selon la taille de l'antémémoire virtuelle attribuée pour au moins certaines demandes du travail de traitement associé.

2. La méthode selon la revendication 1 dans laquelle des algorithmes similaires mais contenant des valeurs différentes de paramètres de fonctionnement, sont utilisés pour commander les tailles de certaines desdites antémémoires virtuelles.

3. La méthode selon la revendication 1 dans laquelle des algorithmes fonctionnellement différents de l'un à l'autre, sont utilisés pour commander les tailles de certaines desdites antémémoires virtuelles.

4. La méthode selon l'une quelconque des revendications 1 à 3 dans laquelle ladite étape d'ajustement des tailles desdites antémémoires virtuelles comprend l'établissement d'une taille d'au moins l'une desdites antémémoires virtuelles selon au moins une fréquence d'utilisation de ladite antémémoire virtuelle par ledit processeur principal (10).

5. La méthode selon la revendication 4 dans laquelle ladite étape d'établissement de la taille de ladite au moins une antémémoire virtuelle est en outre en accord avec une taille plancher d'antémémoire spécifiée par ledit processeur principal (10).

6. La méthode selon la revendication 5 dans laquelle ladite étape d'établissement de la taille de ladite au moins une antémémoire virtuelle comprend les étapes suivantes:

la détermination de l'instant où ladite au moins une antémémoire virtuelle n'a pas été utilisée au cours d'un nombre prédéterminé d'accès dudit fichier (16) par ledit processeur principal (10), et

la réduction de la taille de ladite au moins une antémémoire virtuelle à une taille déterminée par la multiplication de ladite taille plancher d'antémémoire par une valeur constante spécifiée par ledit processeur principal.

7. La méthode selon l'une quelconque des revendications 1 à 6 comprenant en outre l'étape de retenue dans au moins une desdites antémémoires virtuelles comme données retenues d'au moins une page de données spécifiées par ledit processeur principal (10), indépendamment d'une fréquence d'utilisation de ladite au moins une page de données.

8. La méthode selon la revendication 7 comprenant en outre, pour chaque page de données retenues dans ladite mémoire antémémoire (42), une étape de maintien d'une liste de bits d'attribution de rétention comprenant un bit binaire pour chaque enregistrement dans ladite page retenue,

et de conditionnement de l'un desdits bits binaires à un état prédéterminé pour tous les enregistrements dans ladite page retenue et qui doivent être retenus.

9. La méthode selon la revendication 8 comprenant en outre l'étape de libération de pages dans ladite mémoire antémémoire (42) en réponse à une instruction de libération issue dudit processeur principal (10) pour indiquer une passe de données à libérer.

10. La méthode selon la revendication 9 dans laquelle ladite étape de libération comprend les étapes suivantes:

pour chaque passe données à libérer, l'examen desdits bits d'attribution de rétention pour déterminer si l'un quelconque desdits bits d'attribution de rétention se trouve dans ledit état prédéterminé pour des enregistrements de données se trouvant sur ladite page autres que ceux de ladite passe de données à libérer, et

la libération des pages dans lesquelles aucun desdits bits d'attribution de rétention n'est conditionné dans ledit état prédéterminé en dehors de ladite passe de données à libérer.

11. La méthode selon l'une quelconque des revendications 1 à 10 comprenant en outre l'ajustement des tailles relatives d'au moins certaines desdites antémémoires virtuelles selon au moins un ordre d'utilisations d'entrées emmagasinées dans lesdites antémémoires virtuelles.

12. La méthode selon la revendication 11 dans laquelle ladite étape d'ajustement des tailles desdites antémémoires virtuelles comprend les étapes suivantes:

le maintien d'une liste de pages de données dans au moins certaines antémémoires prédéterminées desdites antémémoires virtuelles comprenant une indication de l'ordre d'utilisation précédente desdites pages de données, et

l'élimination parmi toutes lesdites antémémoires virtuelles prédéterminées, au moins des pages de données récemment utilisées lorsqu'une somme desdites tailles de ladite antémémoire virtuelle prédéterminée excède une limite prédéterminée et que l'on désire transférer une autre page de données dans l'une desdites antémémoires virtuelles prédéterminées.

13. Une unité de commande E/S (20) dans un système de traitement de données comprenant un processeur principal (10) pouvant exécuter simultanément une pluralité de types différents de travaux de traitement de données, un fichier de données (16) dans lequel sont emmagasinées une pluralité de pages de données qui sont chacune composées d'une pluralité d'enregistrements de données, ladite unité de commande E/S commandant le transfert des enregistrements de données requis entre ledit processeur principal et ledit fichier et comprenant une mémoire antémémoire physique unique (42), ladite unité de commande étant caractérisée en ce qu'elle comprend:

des moyens de commande (33) pour utiliser ladite mémoire antémémoire physique comme une pluralité d'antémémoires virtuelles différentes attribuées à différents types fonctionnels de travaux de traitement de données, et pour ajuster le nombre des emplacements de mémoire antémémoire attribués auxdites antémémoires virtuelles différentes selon au moins deux ensembles différents d'algorithmes de gestion d'antémémoire pour obtenir des performances optimales en ce qui concerne l'exécution des différents travaux de traitement fonctionnels.

FIG. 1

FIG.2A CONNECT/DISCONNECT CACHE DCB

| WORD | | | |
|---|---|---|---|
| 0 | CONTROL WORD | | |
| 1 | (4) CACHE ID | ALGORITHM (4)# | C/D (1) |
| 2 | | | |
| 3 | | | |
| 4 | | | |
| 5 | | | |
| 6 | | | |
| 7 | | | |

FIG.2B CUSTOMIZE CACHE DCB

| WORD | | | | |
|---|---|---|---|---|
| 0 | CONTROL WORD | | | |
| 1 | (4) CACHE ID | T1 | T2 | PREFETCH MULTIPLIER |
| 2 | CACHE FLOOR SIZE | X-FACTOR FLOOR SIZE MULTIPLIER | | |
| 3 | BYPASS THRESHOLD | | | |
| 4 | | | | |
| 5 | | | | |
| 6 | | | | |
| 7 | | | | |

FIG.2C PIN/UNPIN PAGE DCB

| WORD | | | |
|---|---|---|---|
| 0 | CONTROL WORD | | |
| 1 | P/U | All | RBA |
| 2 | RBA | RECORD COUNT | |
| 3 | RSB ADDRESS | | |
| 4 | CHAIN ADDRESS | | |
| 5 | BYTE COUNT | | |
| 6 | DATA ADDRESS | | |

FIG.2D R/W DATA DCB

| WORD | | |
|---|---|---|
| 0 | CONTROL WORD | |
| 1 | (4) CACHE ID | RBA |
| 2 | RBA | RECORD COUNT |
| 3 | RSB ADDRESS | |
| 4 | CHAIN ADDRESS | |
| 5 | BYTE COUNT | |
| 6 | DATA ADDRESS | |

# FIG. 3A

DIRECTORY TABLE

| | 1 BIT | 1 BIT | 11 BITS | 9 BITS | 9 BITS | 8 BITS |
|---|---|---|---|---|---|---|
| | FREE/USED INDICATOR | HOME INDICATOR | FILE SUBSYSTEM BLOCK ADDRESS | BACKWARD POINTER | FOWARD POINTER | CACHE ADDRESS |
| 0 | | | | | | |
| 1 | | | | | | |
| 2 | | | | | | |
| 3 | | | | | | |
| 4 | | | | | | |
| 5 | | | | | | |
| 6 | | | | | | |
| ⋮ | ⋮ | ⋮ | ⋮ | ⋮ | ⋮ | ⋮ |
| 309 | | | | | | |
| 310 | | | | | | |

52 — FIRST FREE POINTER

54 — FREE PAGE COUNTER

# FIG. 3B

LEAST RECENTLY USED TABLE

| | FOWARD POINTER | BACKWARD POINTER | DIRECTORY POINTER | VIRTUAL CACHE ID (3 BITS) | PIN ALLOCATION BITS (8 BITS) |
|---|---|---|---|---|---|
| 0 | | | | | |
| 1 | | | | | |
| 2 | | | | | |
| 3 | | | | | |
| 4 | | | | | |
| ⋮ | ⋮ | ⋮ | ⋮ | ⋮ | |
| 191 | | | | | |

50

LEAST RECENTLY USED POINTER

MOST RECENTLY USED POINTER — 51

PIN POINTER — 53

PIN COUNTER — 55

3

# FIG. 3C

VIRTUAL CACHE CONTROL TABLE

| VIRTUAL CACHE ID | CACHE CONNECTED | HIT RATIO | (4) HIT COUNT | 08 COUNT | TI | T2 | PRESENT CACHE SIZE | CACHE FLOOR SIZE | FLOOR SIZE X FACTOR | INACTIVITY COUNTER | BYPASS THRESHOLD | PREFETCH MULTIPLIER | ALGO # |
|---|---|---|---|---|---|---|---|---|---|---|---|---|---|
| Ø | | | | | | | | | | | | | |
| 1 | | | | | | | | | | | | | |
| 2 | | | | | | | | | | | | | |
| 3 | | | | | | | | | | | | | |
| 4 | | | | | | | | | | | | | |
| 5 | | | | | | | | | | | | | |
| 6 | | | | | | | | | | | | | |
| 7 | | | | | | | | | | | | | |

EP 0 114 944 B1

SEARCH THE DIRECTORY
FOR THE REQUESTED BLOCK

FIG. 5A

HASH ENTRY
POINT 2

HASH ENTRY
POINT 1

FIG. 5B

HASH ENTRY
POINT

FIG 10A

FREE
CLAIM

FIG. 10B

FIG.11A

HASH ENTRY

FIG. 11A

HASH ENTRY   FIRST FREE

FIG. 11B

FIRST FREE

FIG. 11D

HASH
ENTRY
FIRST FREE

## FIG. 6

1/0 OPERATION PROCESS

FIG. 7A

CACHE ALGORITHM

START

UNPIN CACHE COMMAND ? — N

Y

UNPIN THE REQUESTED RECORDS FROM THE PINNING CACHE

SEE FIG. 15

EXIT

WRITE OPERATION — N / Y

RESET THE WRITE THROUGH AND WRITE OPERATION FLAGS

SET THE WRITE THROUGH AND WRITE OPERATION FLAGS

GET THE BYPASS THRESHOLD FOR THE VIRTUAL CACHE TO BE USED FROM THE CCT.

RESET THE USED CACHE INACTIVITY COUNTER, ADD TO ALL OTHER ACTIVE CACHE'S INACTIVITY COUNTERS

IS THE DCB BYTE COUNT ≥ BYPASS THRESHOLD FOR THE SPECIFIED CACHE ? — N

Y

ANY INACTIVITY COUNTERS OVERFLOW ? — Y

WRITE OPERATION ? — N

Y 78

SET CACHE STATUS TO INDICATE BYPASS THRSHLD. EXCEEDED

DROP CACHE FLOOR SIZE TO FLOOR SIZE TIMES XFACTOR FOR THAT CACHE

EXIT

CLEAR DISK OPERATION RECORD RECORD COUNT

RESET THE WRITE THROUGH FLAG

CLEAR THE HIT / MISS BLOCK FLAG

INITIALIZE BLOCK COUNTER = 1

N

# FIG. 7B

FIND THE
R B A'S BLOCK
NUMBER AND
HASH NUMBER

INITIALIZE
CACHE STATUS
= TOTAL HIT

WRITE
OPERATION
?

WRITE
THROUGH
?

SETUP THE
OPERATION TO
INITIALIZE
BASE II  — 84

E

SEARCH THE DIRECTORY
TABLE FOR THE REQUESTED BLOCK

WAS
IT FOUND
?

A

WRITE
THROUGH
?

WRITE
OPERATION
?

B

ADD 8 TO THE RECORD
COUNT FOR MISS BLOCK

WAS
1st BLOCK MISS
AND 2nd BLOCK
HIT ?  — 92

C

WAS
THERE A MISS
BEFORE
?

SET FIRST MISS BLOCK
EQUAL BLOCK COUNTER

D

9

FIG. 7C

FIG 7D

H

WRITE THROUGH ?

Y

LAST BLOCK A MISS ?

N

SETUP THE SYSTEM TO CACHE OPERATION

N

Y

I

F

WRITE THROUGH ?

N

Y

SETUP THE CACHE TO SYSTEM OPERATION

SETUP THE CACHE TO DISK OPERATION

B

J

WAS LAST BLOCK A MISS ?

N

SETUP THE SYSTEM TO CACHE OPERATION.

Y

WAS ANY BLOCK A MISS

Y

N

SET CACHE STATUS EQUAL MISS

EXIT

ADD A BLOCK TO CACHE

FIG. 8

```
                    START

              ANY
         Y ─ FREE PAGES ─ N
              LEFT?

         GET THE CACHE PAGE #
         AND CACHE I D OF THE
         LRU CACHE PAGE

                    IS
                THE PRESENT
      N ─── CACHE SIZE > THE CACHE ─── Y
         FLOOR SIZE FOR THIS PAGE'S
              CACHE   ?

    GET THE CACHE PAGE          DELETE THIS PAGE
    # AND CACHE ID OF           FROM THE CACHE
    THE NEXT LRU CACHE
    PAGE

                    WAS
         N ──── THE HOME ──── Y
              POSITION USED
                    ?

    ADD THE PAGE TO THE                          END OF
    CACHE USING THE CURRENT      59 Y ──────── CHAIN FOUND
    HASH NUMBER                                     ?
                  SEE FIG.9
                              WAS          68        N
         EXIT            60 Y  END OF CHAIN
                        ──── JUST DELETED          SWAP THE
                              ?                   CONFLICTING ENTRY
              WAS                    SEE FIG.12     WITH THE
    61 ───── IT ALSO A                N            FIRST FREE
              HOME ENTRY                                    73
              ?

    62   N
    SET END OF CHAIN EQUAL PREVIOUS
    END OF CHAIN SAVED DURING SEARCH
                                              SET THE ADDED
                                              DIRECTORY ENTRY'S
                                              BACK POINTER = END
    SET CURRENT HASH NUMBER EQUAL             OF CHAIN TURN OFF HOME
    TO THE FIRST FREE

                                              SET END OF CHAIN ENTRY'S
    ADD THE PAGE TO THE CACHE USING           FOWARD POINTER
    THE CURRENT HASHNUMBER                     = ADDED ENTRY

                                                    EXIT
```

ADD A PAGE TO THE CACHE USING THE CURRENT. HASH NUMBER,

```
                    ( START )
                        |
          +-----------------------------+
          | SUBTRACT ONE FROM           |
          | THE FREE PAGE COUNT         |
          +-----------------------------+
                        |
          +-----------------------------+
          | GET THE MRU ENTRY'S         |
          | FORWARD POINTER             |
          | FROM THE LRU TABLE          |
          | (FIRST FREE)                |
          +-----------------------------+
                        |
          +-----------------------------+
          | SET THE MRU POINTER=        |
          | THE FIRST FREE PAGE         |
          +-----------------------------+
                        |
          +-----------------------------+
          | SET THE NEW ENTRY'S         |
          | DIRECTORY POINTER=          |
          | CURRENT. HASH #             |
          +-----------------------------+
                        |
                      /   \
                    /  IS   \
                  / THIS A    \      N
                 < PINNING      >------+
                  \ CACHE REQUEST/     |
                    \    ?    /        |
                      \   /            |
                       | Y            |
          +-----------------------------+   |
          | UNLINK THE LRU TABLE        |   |
          | ENTRY FOR THIS PAGE         |   |
          | FROM THE LINKED LIST        |   |
          +-----------------------------+   |
                        |                   |
          +-----------------------------+   |
          | SET APPROPRIATE PIN         |   |
          | ALLOCATION BITS IN          |   |
          | THIS LRU TABLE ENTRY        |   |
          | FOR THE RECORDS TO          |   |
          | BE PINNED                   |   |
          +-----------------------------+   |
                        |                   |
          +-----------------------------+   |
          | ADD THIS PAGE TO CHAIN      |   |
          | OF PINNED PAGES. INCREMENT  |   |
          | PIN COUNT.                  |   |
          +-----------------------------+   |
                        |                   |
                        +-------------------+
                        |
          +-----------------------------+
          | SELECT THE DIRECTORY        |
          | ENTRY POINTED TO BY         |
          | THE CURRENT HASH NUMBER     |
          +-----------------------------+
```

```
          +-----------------------------+
          | SET USED AND HOME           |
          | INDICATORS ALSO SAVE        |
          | THE FILE SUBSYSTEM          |
          | BLOCK ADDRESS               |
          +-----------------------------+
                        |
          +-----------------------------+
          | SET FORWARD POINTER=        |
          | END OF CHAIN ALSO SET       |
          | CACHE ADDRESS               |
          +-----------------------------+
                        |
          +-----------------------------+
     94   | SET THE BACK POINTER        |
          | ENTRY'S FORWARD             |
          | POINTER = ADDED ENTRY'S     |
          | OLD FORWARD PTR.            |
          +-----------------------------+
                        |
          +-----------------------------+
     95   | SET THE OLD                 |
          | FORWARD POINTER             |
          | ENTRY'S BACK POINTER        |
          | = ADDED ENTRY'S BACK        |
          | PTR.                        |
          +-----------------------------+
                        |
                      /   \
                    / WAS   \
                  / THE ADDED \    N
                 < ENTRY THE FIRST >----> ( EXIT )
                  \  FREE ?   /
                    \   /
                      | Y
          +-----------------------------+
          | SET THE NEW FIRST           |
          | FREE = ADDED ENTRY'S        |
          | FORWARD POINTER             |
          +-----------------------------+
                        |
                     ( EXIT )
```

FIG. 9

FIG 12

SWAP THE CONFLICTING ENTRY
WITH THE FIRST FREE

START

↓

SELECT THE
CONFLICTING
DIRECTORY
TABLE ENTRY

↓

IS
THE ENTRY
STILL USED
? —N→ EXIT

↓ Y

SAVE ALL OF THIS
ENTRY'S DATA TO
MOVE TO FIRST
FREE

↓

CHANGE THE ASSOCIATED LRU
TABLE ENTRY'S DIRECTORY
POINTER TO POINT TO
THE FIRST FREE

↓

SET THE BACK POINTER'S
DIRECTORY ENTRY'S
FORWARD POINTER =
FIRST FREE

↓

SET THE FIRST FREE'S
DATA = THE CONFLICTING
ENTRY'S SAVED DATA
ALSO SAVE THE FIRST
FREE'S DATA FOR
MOVE LATER

WAS
THE MOVED
ENTRY AN END OF
CHAIN ?

N→ SET THE
FORWARD
POINTER ENTRY'S
BACK POINTER =
FIRST FREE

↓ Y

SET THE NEW
FIRST FREE
EQUAL TO
THE CONFLICTING
ENTRY

↓

SET THE
CONFLICTING
ENTRY'S DATA
= SAVED DATA
FROM FIRST FREE

↓

SET THE LAST
FREE'S FOWARD
POINTER =
NEW FIRST
FREE

↓

SET THE 2nd
FREE ENTRY'S
BACK POINTER =
NEW
FIRST FREE

↓

EXIT

14

FIG 13A

BLOCK a

| 0 | 1 | 2 | 3 | 4 | 5 | 6 | 7 |

ONE BLOCK

FIG 13B

BLOCK a

| 0 | 1 | 2 | 3 | 4 | 5 | 6 | 7 |

BLOCK b

| 0 | 1 | 2 | 3 | 4 | 5 | 6 | 7 |

TWO BLOCKS

FIG 13C

BLOCK a

BLOCK b

BLOCK c

| 6 | 7 |

THREE BLOCKS

PERFORM THE PREFETCH CALCULATION

**FIG.14A**

Flowchart:

START

WAS THE LAST BLOCK A MISS ? — N → EXIT

Y ↓

GET THE T₁ VALUE FOR THE VIRTUAL CACHE BEING USED FROM THE CACHE CONTROL TABLE

↓

IS THE LAST RECORD REQUESTED ABOVE THE T1 VALUE FOR ITS BLOCK ? — N → EXIT

Y ↓

GET THE T₂ VALUE FOR THE VIRTUAL CACHE BEING USED FROM THE CACHE CONTROL TABLE

↓

IS THE LAST RECORD REQUESTED ABOVE THE T₂ VALUE FOR ITS BLOCK? — N → SET PREFETCH BLOCK COUNT EQUAL 1

Y ↓

SET PREFETCH BLOCK COUNT EQUAL 2

↓

GET THE PREFETCH MULTIPLIER FROM THE CACHE CONTROL TABLE FOR THE CACHE BEING USED

↓

MULTIPLY THE PREFETCH BLOCK COUNT TIMES THE PREFETCH MULTIPLIER

↓

A

## FIG.14B

INCREMENT THE CURRENT BLOCK AND HASH NUMBERS

SEARCH THE DIRECTORY TABLE FOR THE CURRENT BLOCK.

— SEE FIG. 4

DECREMENT THE PREFETCH BLOCK COUNT

WAS IT FOUND ?

Y

EXIT

IS IT ZERO ?

N

N

ADD THE BLOCK TO THE CACHE ADD 8 TO THE RECORD COUNT

Y

EXIT

SET UP THE DISK-TO-CACHE OPERATION

A

17

## UNPIN A CACHE PAGE ROUTINE

# FIG 15

START

UNPIN ALL PAGES ? → N → SEARCH THE DIRECTORY TABLE FOR THE BLOCK TO BE UNPINNED

UNPIN ALL PAGES ? → Y → USE PIN POINTER AND PIN COUNTER TO PLACE ALL OF PINNED LIST BACK TO FREE PAGE LIST. KILL ALL PAGES FROM DIRECTORY.

EXIT

WAS THE REQUESTED BLOCK IN CACHE ? → N → EXIT

WAS THE REQUESTED BLOCK IN CACHE ? → Y → TURN OFF PIN ALLOCATION BITS FOR THE RECORDS TO BE UNPINNED

ARE ALL 8 RECORDS IN THE BLOCK UNPINNED ? → N → EXIT

ARE ALL 8 RECORDS IN THE BLOCK UNPINNED ? → Y → LINK THIS ENTRY BACK INTO THE FREE PAGE LIST. REMOVE PAGE FROM DIRECTORY. REMOVE FROM PINNED LIST. DECREMENT PIN COUNTER.

EXIT